(19)

Europäisches
Patentamt

European
Patent Office

Office européen
des brevets

(11) **EP 4 432 156 A1**

(12) **EUROPEAN PATENT APPLICATION**

(43) Date of publication:
**18.09.2024 Bulletin 2024/38**

(21) Application number: **24161313.2**

(22) Date of filing: **05.03.2024**

(51) International Patent Classification (IPC):
**G06F 40/247** (2020.01)    **G06F 40/30** (2020.01)

(52) Cooperative Patent Classification (CPC):
**G06F 40/247; G06F 40/30**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.03.2023 JP 2023041957**

(71) Applicant: **SCREEN Holdings Co., Ltd.**
**Kyoto-shi, Kyoto 602-8585 (JP)**

(72) Inventors:
• **KASUBUCHI, Kiyotaka**
**Kyoto-shi, 602-8585 (JP)**
• **YOSHIDA, Akiko**
**Kyoto-shi, 602-8585 (JP)**
• **SUMIYA, Yuki**
**Kyoto-shi, 602-8585 (JP)**
• **INOMATA, Masaki**
**Kyoto-shi, 602-8585 (JP)**

(74) Representative: **Kilian Kilian & Partner mbB**
**Zielstattstraße 23a**
**81379 München (DE)**

(54) **SIMILARITY CALCULATION APPARATUS, SEMANTIC REPRESENTATION GENERATING APPARATUS, SIMILARITY CALCULATION PROGRAM, AND SIMILARITY CALCULATION METHOD**

(57)    A similarity calculation apparatus includes: a distance calculator calculating a distance between vectors defined for words; and a determination part determining a pair of the words corresponding to the vectors to be synonyms when the distance between the vectors is smaller than or equal to a predefined distance, wherein the distance calculator calculates, as the distance between the vectors, a curvilinear surface distance between the vectors in a hyperbolic space in which the vectors are defined. Thus, the accuracy of calculating a similarity between the words can be increased.

F I G. 1

EP 4 432 156 A1

**Description**

BACKGROUND OF THE INVENTION

Field of the Invention

The technology disclosed in this DESCRIPTION relates to a synonym calculation technology and a semantic representation generating technology.

Description of the Background Art

The technologies for computers to obtain knowledge from documents described in natural languages have been developed. To obtain the knowledge, it is necessary to calculate a similarity between words in a document with high accuracy and use the similarity for creating a dictionary (see, for example, Japanese Patent Application Laid-Open No. 2019-121044).
The conventional methods of calculating a similarity between words include a method of calculating a difference between directions of vectors defined for words as a cosine similarity.
The method of calculating the cosine similarity has, however, a problem of increase in a similarity between words as the words more often appear in the document. Thus, the accuracy of calculating the similarity is sometimes insufficient.

SUMMARY

The present invention is directed to a similarity calculation apparatus, a semantic representation generating apparatus, a similarity calculation program, and a similarity calculation method.
One aspect of the present invention is a similarity calculation apparatus that calculates a similarity between words, the apparatus including: a distance calculator calculating a distance between vectors defined for the words; and a determination part determining a pair of the words corresponding to the vectors to be synonyms when the distance between the vectors is smaller than or equal to a predefined distance, wherein the distance calculator calculates, as the distance between the vectors, a curvilinear surface distance between the vectors in a hyperbolic space in which the vectors are defined.
Defining each of the vectors in the hyperbolic space and calculating the distance between the vectors in consideration of a curvature of a curved surface of the hyperbolic space can increase the accuracy of calculating the similarity.
One aspect of the present invention is a semantic representation generating apparatus that generates semantic representation data from natural language information, the apparatus including: a concept tag system table recording concept information hierarchically and ambiguously representing meanings of morphemes of a group of word classes in a natural language; a text analysis part receiving text data described in the natural language and performing a superficial analysis including a syntax analysis on the text data to generate syntax data representing a structure of a sentence included in the text data; and a semantic analysis part generating the semantic representation data corresponding to the text data, based on the syntax data, wherein the concept tag system table is updated based on the pair of words associated with each other in the synonym dictionary, the text analysis part provides a concept tag to each of the morphemes included in the text data, based on the syntax data with reference to the concept tag system table, the concept tags indicating the concept information hierarchically representing the meanings of the morphemes, the semantic analysis part provides a semantic tag to a pair of a phrase or a sequence of phrases which correspond to a predicate and an other phrase or an other sequence of phrases which have a modification relation with the predicate, based on the syntax data, the semantic tag indicating semantic information representing a semantic relation between the pair, the phrase or the sequence of phrases and the other phrase or the other sequence of phrases being included in the text data, and the semantic analysis part generates the semantic representation data, based on the concept tag provided to each of the morphemes included in the text data and the semantic tag provided to the pair of the phrase or the sequence of phrases and the other phrase or the other sequence of phrases that are included in the text data.
Defining each of the vectors in the hyperbolic space and calculating the distance between the vectors in consideration of a curvature of a curved surface of the hyperbolic space can increase the accuracy of calculating the similarity.
One aspect of the present invention is a similarity calculation program including a plurality of commands to be executed by one or more processors and executable by a computer, the similarity calculation program functioning as, using the plurality of commands executed by the one or more processors, the following steps including: causing the computer to calculate a distance between vectors defined for words; and causing the computer to determine a pair of the words corresponding to the vectors to be synonyms when the distance between the vectors is smaller than or equal to a predefined distance, wherein the distance between the vectors is a curvilinear surface distance between the vectors in a hyperbolic space in which the vectors are defined.

Defining each of the vectors in the hyperbolic space and calculating the distance between the vectors in consideration of a curvature of a curved surface of the hyperbolic space can increase the accuracy of calculating the similarity.

One aspect of the present invention is a similarity calculation method of calculating a similarity between words, the method including: calculating a distance between vectors defined for the words; and determining a pair of the words corresponding to the vectors to be synonyms when the distance between the vectors is smaller than or equal to a predefined distance, wherein the calculating includes calculating, as the distance between the vectors, a curvilinear surface distance between the vectors in a hyperbolic space in which the vectors are defined.

Defining each of the vectors in the hyperbolic space and calculating the distance between the vectors in consideration of a curvature of a curved surface of the hyperbolic space can increase the accuracy of calculating the similarity.

Thus, the object of the present invention is to increase the accuracy of calculating a similarity between words.

These and other objects, features, aspects, and advantages of the present invention will become more apparent from the following detailed description of the present invention when taken in conjunction with the accompanying drawings.

BRIEF DESCRIPTION OF THE DRAWINGS

FIG. 1 schematically illustrates an example configuration of a similarity calculation apparatus according to an embodiment;
FIG. 2 illustrates an example hardware configuration of the similarity calculation apparatus according to the embodiment;
FIG. 3 is a flow chart illustrating example operations of the similarity calculation apparatus according to the embodiment;
FIG. 4 conceptually illustrates an example of a curvilinear surface distance in a hyperbolic space and a distance between Euclidean coordinates;
FIG. 5 illustrates an example synonym dictionary according to the embodiment;
FIG. 6 conceptually illustrates an example configuration of a semantic representation generating apparatus according to the embodiment;
FIG. 7 illustrates an example hardware configuration of the semantic representation generating apparatus according to the embodiment;
FIG. 8 is a diagram for describing a CT system table according to the embodiment;
FIG. 9 is a diagram for describing an ST system table according to the embodiment;
FIG. 10 is a diagram for describing the ST system table according to the embodiment;
FIG. 11 is a diagram for describing the ST system table according to the embodiment;
FIG. 12 is a diagram for describing a morpheme dictionary according to the embodiment;
FIG. 13 is a flow chart illustrating an example procedure of semantic representation generating processes;
FIG. 14 is a flow chart illustrating an example procedure of a morpheme analysis;
FIG. 15 is a flow chart illustrating an example procedure of a syntax analysis;
FIG. 16 is a flow chart illustrating an example procedure of a context analysis;
FIG. 17 is a flow chart illustrating an example procedure of a semantic analysis;
FIG. 18A is a diagram for describing the semantic representation generating processes according to the embodiment based on a specific example;
FIG. 18B is a diagram for describing the semantic representation generating processes according to the embodiment based on the specific example;
FIG. 18C is a diagram for describing the semantic representation generating processes according to the embodiment based on the specific example;
FIG. 18D is a diagram for describing the semantic representation generating processes according to the embodiment based on the specific example;
FIG. 19A is a diagram for describing a first generation example of semantic representation data according to the embodiment;
FIG. 19B is a diagram for describing the first generation example of the semantic representation data according to the embodiment;
FIG. 19C is a diagram for describing the first generation example of the semantic representation data according to the embodiment;
FIG. 19D is a diagram for describing the first generation example of the semantic representation data according to the embodiment;
FIG. 20A is a diagram for describing a second generation example of the semantic representation data according to the embodiment;

FIG. 20B is a diagram for describing the second generation example of the semantic representation data according to the embodiment;

FIG. 20C is a diagram for describing the second generation example of the semantic representation data according to the embodiment;

FIG. 21A is a diagram for describing a third generation example of the semantic representation data according to the embodiment; and

FIG. 21B is a diagram for describing the third generation example of the semantic representation data according to the embodiment.

DESCRIPTION OF THE PREFERRED EMBODIMENTS

Embodiments will be hereinafter described with reference to the attached drawings. Although detailed features are described in Embodiments below for describing the technology, they are mere exemplification and not necessarily essential features for making Embodiments feasible.

Note that the drawings are drawn in schematic form, and configurations in the drawings are appropriately omitted or simplified for convenience of the description. The mutual relationships in size and position between the configurations in the different drawings are not necessarily accurate but may be appropriately changed. The drawings such as plan views except cross-sectional views are sometimes hatched for facilitating the understanding of the details of Embodiments.

In the following description, the same reference numerals are assigned to the same constituent elements, and their names and functions are the same. Therefore, detailed description of such constituent elements may be omitted to avoid redundant description.

Unless otherwise specified, an expression "comprising", "including", or "having" a certain constituent element is not an exclusive expression for excluding the presence of the other constituent elements in the following description.

Even when the ordinal numbers such as "first" and "second" are used in the following description, these terms are used for convenience to facilitate the understanding of the details of Embodiments. The order indicated by these ordinal numbers does not restrict the details of Embodiments.

[Embodiment 1]

A similarity calculation apparatus, a similarity calculation program, and a similarity calculation method according to Embodiment 1 will be hereinafter described.

[Configuration of similarity calculation apparatus]

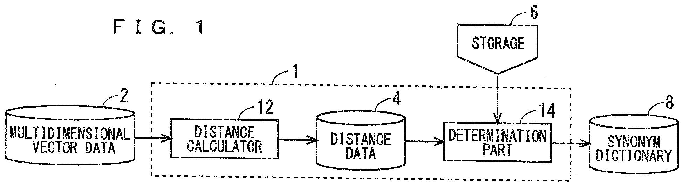

FIG. 1 schematically illustrates an example configuration of a similarity calculation apparatus 1 according to Embodiment 1.

As illustrated in the example of FIG. 1, the similarity calculation apparatus 1 includes a distance calculator 12 and a determination part 14.

The distance calculator 12 calculates a distance between vectors, based on pieces of multidimensional vector data 2 on a plurality of input words (e.g., nouns), and outputs distance data 4 indicating a distance between the vectors. A method of calculating a distance between vectors will be described later.

The determination part 14 determines whether a pair of words corresponding to the vectors between which the distance is indicated by the distance data 4 are synonyms, based on a threshold in a storage 6 (this operation and the aforementioned operation of the distance calculator 12 are collectively referred to as similarity calculation processes). Then, the determination part 14 registers the pair of words determined to be synonyms, in a synonym dictionary 8.

[Hardware configuration of similarity calculation apparatus]

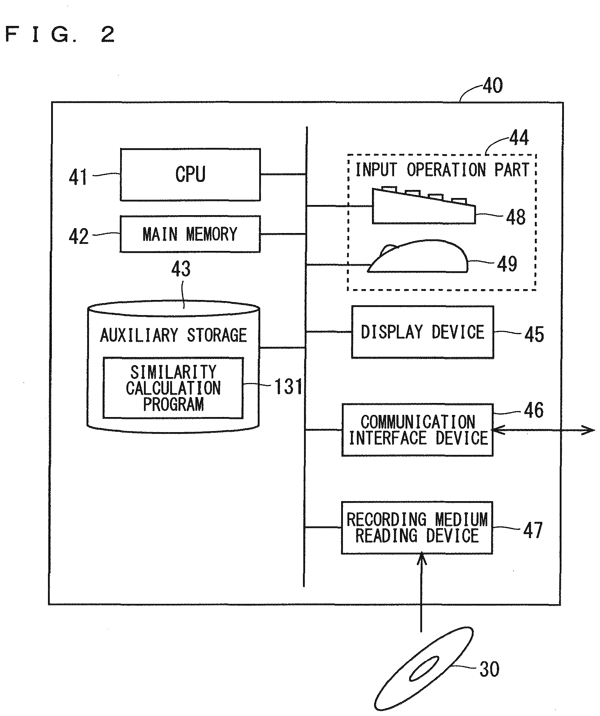

FIG. 2 illustrates a configuration of a computer 40 operating as the similarity calculation apparatus 1 by a similarity calculation program 131, that is, an example configuration of the similarity calculation apparatus 1 according to Embodiment 1.

The computer 40 illustrated in FIG. 2 includes a CPU 41, a main memory 42, an auxiliary storage 43, an input operation part 44, a display device 45, a communication interface device 46, and a recording medium reading device 47. The main memory 42 is, for example, a DRAM. The auxiliary storage 43 is, for example, a hard disk or a solid state drive. The input operation part 44 includes, for example, a keyboard 48 or a mouse 49. The display device 45 is, for example, a liquid crystal display.

The communication interface device 46 is an interface circuit for wired communication or wireless communication. The communication interface device 46 can communicate with, for example, the synonym dictionary 8 illustrated in FIG. 1. The recording medium reading device 47 is an interface circuit for a recording medium 30 storing, for example, a program. The recording medium 30 is, for example, a non-transitory recording medium such as a CD-ROM, a DVD-ROM, or an USB memory, and corresponds to, for example, the pieces of multidimensional vector data 2 or the storage 6.

In the computer 40 with such a configuration, the auxiliary storage 43 stores the similarity calculation program 131. The similarity calculation program 131 is a program for implementing operations of the distance calculator 12 and the determination part 14 in FIG. 1.

The similarity calculation program 131 may be received from a server or another computer through the communication interface device 46, or may be read from the recording medium 30 through the recording medium reading device 47.

The CPU 41 executes the similarity calculation program 131 stored in the auxiliary storage 43, using the main memory 42 as an operation memory to perform the similarity calculation processes on input text data Din stored in the main memory 42. When the CPU 41 performs the similarity calculation processes, the computer 40 functions as the similarity calculation apparatus 1.

The aforementioned configuration of the computer 40 is only one example. Thus, the similarity calculation apparatus 1 can be implemented by various computers.

[Operations of similarity calculation apparatus]

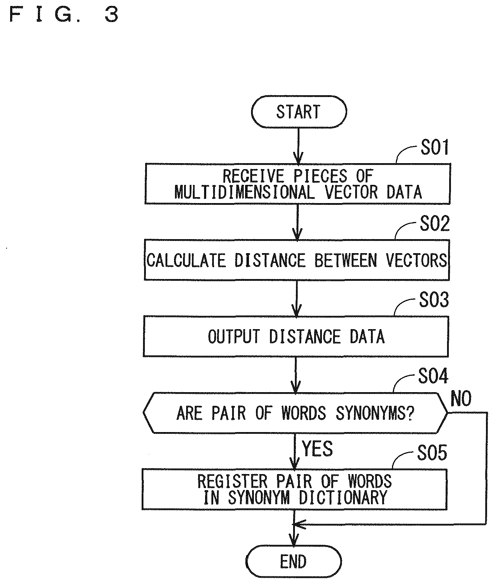

Next, operations of the similarity calculation apparatus 1 according to Embodiment 1 will be described with reference to FIGS. 3 to 5. FIG. 3 is a flow chart illustrating example operations of the similarity calculation apparatus 1 according to Embodiment 1.

First, the distance calculator 12 receives the pieces of multidimensional vector data 2 on a plurality of words (Step S01). Here, the piece of multidimensional vector data 2 corresponding to each of the words is defined by multidimensional Euclidean coordinates in advance.

Next, the distance calculator 12 calculates a distance between a plurality of vectors based on the pieces of multidimensional vector data 2 (Step S02).

For example, assume that a vector $W_i$ of a word "山岳" (sangaku/mountains) and a vector $W_j$ of a word "市街" (shigai/an urban area) to be used for calculating a similarity are expressed as below.

$$w_i = \begin{pmatrix} 3 \\ 5 \\ 8 \end{pmatrix} \in \mathcal{R}^3 \quad \cdots (1)$$

$$w_j = \begin{pmatrix} 6 \\ 4 \\ 3 \end{pmatrix} \in \mathcal{R}^3 \quad \cdots (2)$$

Here, a similarity is calculated in a conventional method of calculating a cosine similarity as below. The similarity becomes higher as the value is closer to 1.

$$cos\theta = \frac{<w_i \cdot w_j>}{\|w_i\| \cdot \|w_j\|} = \frac{62}{9.899 \times 7.810} = 0.80 \quad \cdots (3)$$

In the calculating method indicated by Equation (3), however, each vector is defined in a flat space, and an inverse document frequency (i.e., IDF) of a word is disregarded. Thus, the calculating method has a problem of obtaining an inaccurate similarity between words in a curved space, and a problem of increasing a similarity between words as the words more often appear in a document.

In Embodiment 1, each of vectors is defined in a hyperbolic space, and a distance between the vectors is calculated in consideration of a curvature of a curved surface of the hyperbolic space. This reduces the problems (measurement ambiguity caused by disregarding the curved surface and the IDF) in the conventional method, and increases the accuracy of calculating the similarity.

A specific method is multiplying a distance between Euclidean coordinates of vectors by a curvature of a curved surface between the vectors to calculate a curvilinear surface distance (geodetic line) and obtaining the curvilinear surface distance as the distance between the vectors.

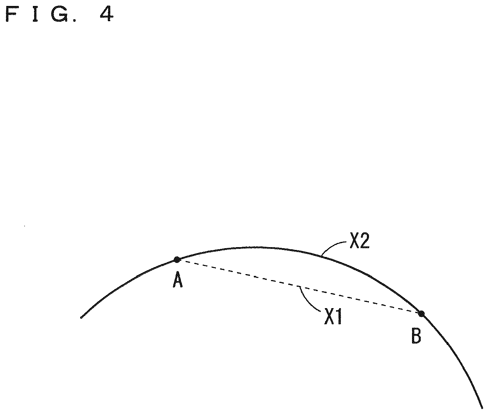

FIG. 4 conceptually illustrates an example of a curvilinear surface distance in a hyperbolic space and a distance between Euclidean coordinates.

As illustrated in the example of FIG. 4, when a vector A and a vector B are defined in the hyperbolic space, a distance X1 (dotted line) is a distance between Euclidean coordinates of the vector A and the vector B. A distance X2 is a curvilinear surface distance (geodetic line) between the vector A and the vector B.

The calculation of the distance X2 as the curvilinear surface distance (geodetic line) in Embodiment 1 calculates a distance between the vectors with high accuracy, and consequently increases the accuracy of calculating a similarity between words.

A distance between Euclidean coordinates of the vector $W_i$ and the vector $W_j$ is 62, based on Equations (1) and (2).

Since a curvature of a curved surface between the vectors $W_i$ and $W_j$ corresponds to a norm of a vector product of the vectors, the curvature is calculated as below based on Equations (1) and (2).

$$w_i \times w_j = \begin{bmatrix} w_i^1 \\ w_i^2 \\ w_i^3 \end{bmatrix} \times \begin{bmatrix} w_j^1 \\ w_j^2 \\ w_j^3 \end{bmatrix} \begin{bmatrix} w_i^2 w_j^3 - w_j^2 w_i^3 \\ -w_i^1 w_j^3 + w_j^1 w_i^3 \\ w_i^1 w_j^2 - w_j^1 w_i^2 \end{bmatrix} = \begin{bmatrix} 15 - 32 \\ -9 + 48 \\ 12 - 30 \end{bmatrix} = \begin{bmatrix} -17 \\ 39 \\ 18 \end{bmatrix} \cdots (4)$$

$$\| w_i \times w_j \| = 46.2 \quad \cdots (5)$$

Thus, the curvilinear surface distance (geodetic line) between the vectors in consideration of the curvature of the curved surface of the hyperbolic space is calculated to be $62 \times 46.2 = 2864.4$. The curvilinear surface distance between the vectors in consideration of the curvature of the curved surface of the hyperbolic space means that the larger the value of the curvilinear surface distance is, the more distant the vectors are. This indicates that the similarity between the corresponding words is low.

The following will describe another example of calculating a distance with another vector, both in the conventional method of calculating a cosine similarity and in the method of calculating a curvilinear surface distance (geodetic line) between the vectors in consideration of a curvature of a curved surface of a hyperbolic space according to Embodiment 1.

Here, a vector $W_k$ of a word "河川" (kasen/rivers) is expressed as below.

$$w_k = \begin{pmatrix} 2 \\ 1 \\ 4 \end{pmatrix} \in \mathcal{R}^3 \quad \cdots (6)$$

Here, a cosine similarity between the vector $W_i$ and the vector $W_k$ is calculated to be $43/(9.899 \times 4.583) = 0.948$.

In contrast, a distance between Euclidean coordinates of the vector $W_i$ and the vector $W_k$ is 43 based on Equations (1) and (6).

Since a curvature of a curved surface between the vectors $W_i$ and $W_k$ corresponds to a norm of a vector product of the vectors, the curvature is 14.457 based on Equations (1) and (6).

Thus, the distance between the vectors in consideration of the curvature of the curved surface of the hyperbolic space is calculated to be $43 \times 14.457 = 621.651$.

The aforementioned results show that a difference between the calculated values of the cosine similarity between the vector $W_i$ and the vector $W_j$ and the cosine similarity between the vector $W_i$ and the vector $W_k$ in the conventional method is not large.

In contrast, a difference between values of the distance (similarity) between the vector $W_i$ and the vector $W_j$ and the distance (similarity) between the vector $W_j$ and the vector $W_k$ is large when the values are calculated in consideration of the curvature of the curved surface of the hyperbolic space.

This is ascribable to a wider range of values that can be indicated by distances between vectors in consideration of a curvature of a curved surface of a hyperbolic space than a range of values that can be indicated by cosine similarities. This reason will contribute to increasing the accuracy of calculating the similarity. In other words, the method of calculating a distance between vectors in consideration of a curvature of a curved surface of a hyperbolic space according to Embodiment 1 can increase the accuracy of calculating a similarity between words.

Next, the distance calculator 12 outputs the calculated distance between the plurality of vectors as the distance data 4 (Step S03).

Then, the determination part 14 compares a distance between the vectors indicated by the distance data 4 and a reference distance (a threshold of the distance) stored in the storage 6 in advance. When the distance between the vectors indicated by the distance data 4 is smaller than or equal to the reference distance, the determination part 14 determines a pair of words corresponding to the vectors between which the distance is indicated by the distance data 4 to be synonyms (Step S04).

Then, the determination part 14 registers the pair of words determined to be synonyms, in the synonym dictionary 8 (Step S05). The determination part 14 does not register a pair of words determined not to be synonyms, in the synonym dictionary 8.

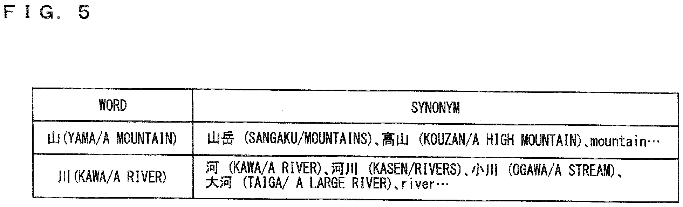

FIG. 5 illustrates an example of the synonym dictionary 8 according to Embodiment 1. As illustrated in the example of FIG. 5, the synonym dictionary 8 registers "山岳" (sangaku/mountains), "高山" (kouzan/a high mountain), and "mountain" as synonyms of a word "山" (yama/a mountain). The synonym dictionary 8 also registers 河 (kawa/a river), "河川" (kasen/rivers), "小川" (ogawa/a stream), "大河" (taiga/ a large river), and "river" as synonyms of a word "川" (kawa/a river). The synonym dictionary 8 registers, for a certain word, one or more synonyms associated with each other.

In Embodiment 1, defining each of vectors in a hyperbolic space and calculating a distance between the vectors in consideration of a curvature of a curved surface of the hyperbolic space can increase the accuracy of calculating a similarity between words corresponding to the vectors.

[Embodiment 2]

A semantic representation generating apparatus according to Embodiment 2 will be described. In the following description, the same reference numerals are assigned to the same constituent elements as those in Embodiment 1, and the detailed description will be appropriately omitted.

[Configuration of semantic representation generating apparatus]

In establishing a knowledge base from the natural language data and implementing a question answering system in natural languages, generating semantic representation data capable of sufficiently representing meanings of words and a meaning of a sentence in natural language data is important to increase the accuracy of obtaining knowledge.

The technology for generating such semantic representation data will be described.

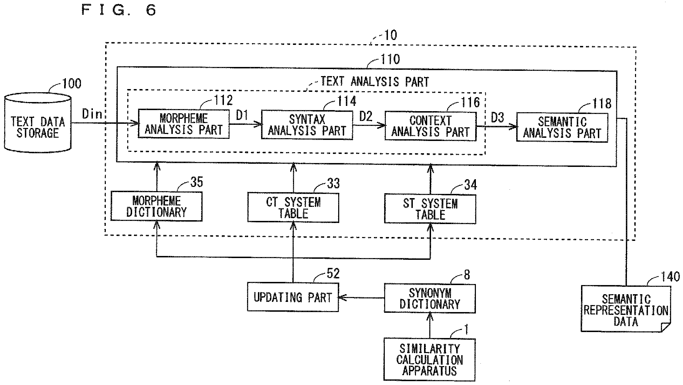

FIG. 6 conceptually illustrates an example configuration of the semantic representation generating apparatus according to Embodiment 2. The semantic representation generating apparatus according to Embodiment 2 is typically implemented by a computer, as will be described later.

A semantic representation generating apparatus 10 generates semantic representation data from natural language data (text data such as a document described in a natural language), and is implemented by causing a computer to execute a semantic representation generating program.

As illustrated in the example of FIG. 6, the semantic representation generating apparatus 10 includes a natural language analysis part 110, a morpheme dictionary 35, a CT system table 33, and an ST system table 34. An updating part 52 updates the CT system table 33, the ST system table 34, and the morpheme dictionary 35 whenever necessary. With reference to the synonym dictionary 8 generated by the similarity calculation apparatus 1 according to Embodiment 1, the updating part 52 updates, for example, definitions of words in the CT system table 33, the ST system table 34, and the morpheme dictionary 35 on a word extracted from a new document, or newly adds the word to the CT system table 33, the ST system table 34, and the morpheme dictionary 35.

The natural language analysis part 110 includes a morpheme analysis part 112, a syntax analysis part 114, a context analysis part 116, and a semantic analysis part 118. In Embodiment 1, text data to be analyzed by the semantic representation generating apparatus 10 is text data described in Japanese, and is stored in a text data storage 100 provided outside of the semantic representation generating apparatus 10.

The natural language analysis part 110 reads the text data that is natural language data to be analyzed, from the text data storage 100. In the natural language analysis part 110, the morpheme analysis part 112 first performs a morpheme analysis on the read text data (referred to as "input text data" hereinafter) Din to generate data in which the input text data is separated for each morpheme (referred to as "spaced-writing data") D1.

In this morpheme analysis, a word class or an inflected form of each of the morphemes included in the spaced-writing data D1 is also determined. In the morpheme analysis, a concept tag (also referred to as "CT" hereinafter) is provided to each of the morphemes in the spaced-writing data D1 with reference to the CT system table 33.

The syntax analysis part 114 performs a syntax analysis on the spaced-writing data D1 obtained as a result of the morpheme analysis to generate syntax data D2 representing a structure (a dependency structure and a phrase structure) of each sentence included in the input text data Din.

The context analysis part 116 performs a context analysis on the input text data Din based on the syntax data D2 described above to identify an antecedent referenced by an anaphor included in the input text data Din and identify a pair of sentences having a discourse relation in the input text data Din, thus generating context data representing an anaphoric relation and the discourse relation in the input text data Din, and outputting context-syntax data D3 made up of the context data and the syntax data D2 described above. The morpheme analysis part 112, the syntax analysis part 114, and the context analysis part 116 may be collectively referred to as a "text analysis part".

The semantic analysis part 118 provides, based on the context-syntax data D3, a semantic tag (also referred to as "ST" hereinafter) indicating semantic information representing a semantic relation between a phrase or a sequence of phrases and another phrase or another sequence of phrases (also referred to as a "phrase-sequence-of-phrases pair" hereinafter) having a modification relation in the input text data Din, to the pair with reference to the ST system table 34. The semantic analysis part 118 then generates semantic representation data 140 corresponding to the input text data Din, based on the concept tag provided to each morpheme included in the spaced-writing data D1 and the semantic tag provided to the phrase-sequence-of-phrases pair in the context-syntax data D3. A semantic tag is provided also between a sentence and a sentence having a discourse relation, which will be described later.

[Hardware configuration of semantic representation generating apparatus]

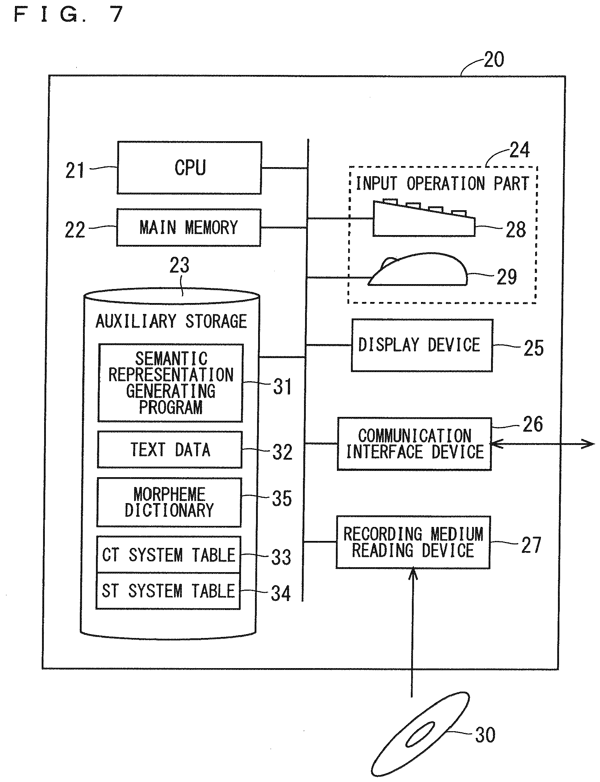

FIG. 7 illustrates a configuration of a computer 20 operating as the semantic representation generating apparatus 10 by a semantic representation generating program 31 to be described later, that is, an example hardware configuration of the semantic representation generating apparatus 10 according to Embodiment 2.

The computer 20 illustrated in FIG. 7 includes a CPU 21, a main memory 22, an auxiliary storage 23, an input operation part 24, a display device 25, a communication interface device 26, and a recording medium reading device 27. The main memory 22 is, for example, a DRAM. The auxiliary storage 23 is, for example, a hard disk or a solid state drive. The input operation part 24 includes, for example, a keyboard 28 or a mouse 29. The display device 25 is, for example, a liquid crystal display.

The communication interface device 26 is an interface circuit for wired communication or wireless communication. The recording medium reading device 27 is an interface circuit for the recording medium 30 storing, for example, a program. The recording medium 30 is, for example, a non-transitory recording medium such as a CD-ROM, a DVD-ROM, or an USB memory.

In the computer 20 having the above configuration, the auxiliary storage 23 stores text data 32 to be analyzed, the CT system table 33, the ST system table 34, and the morpheme dictionary 35 as well as the semantic representation generating program 31 according to Embodiment 2. Storing the text data 32 in the auxiliary storage 23 implements the text data storage 100 for the semantic representation generating apparatus 10 of FIG. 6.

The semantic representation generating program 31, the text data 32, the CT system table 33, the ST system table 34, and the morpheme dictionary 35 may be received from a server or another computer through the communication interface device 26, or may be read from the recording medium 30 through the recording medium reading device 27.

When the semantic representation generating program 31 is executed by the computer 20, the main memory 22 loads the semantic representation generating program 31, and partially or wholly loads the text data 32 as the input text data Din.

The CPU 21 executes the semantic representation generating program 31 stored in the main memory 22, using the main memory 22 as an operation memory to perform semantic representation generating processes on the input text data Din stored in the main memory 22.

Through the semantic representation generating processes, the semantic representation data 140 corresponding to the input text data Din is generated. When the CPU 21 performs the semantic representation generating processes, the computer 20 functions as the semantic representation generating apparatus 10.

The aforementioned configuration of the computer 20 is only one example. Thus, the semantic representation generating apparatus 10 can be implemented by various computers.

[CT system table, ST system table, and morpheme dictionary]

In Embodiment 2, the CT system table 33, the ST system table 34, and the morpheme dictionary 35 are prepared in advance, and are stored in the auxiliary storage 23 as described above (FIG. 7).

As illustrated in FIG. 6, the updating part 52 updates the CT system table 33, the ST system table 34, and the morpheme dictionary 35 whenever necessary. The updating part 52 updates, for example, definitions of words stored in the CT system table 33, the ST system table 34, and the morpheme dictionary 35, or adds new words and the definitions thereof to the CT system table 33, the ST system table 34, and the morpheme dictionary 35.

The updating part 52 updates, whenever necessary, the synonym dictionary 8 generated by the similarity calculation apparatus 1 according to Embodiment 1. Then, the updating part 52 recursively updates, for example, definitions of words in the CT system table 33, the ST system table 34, and the morpheme dictionary 35 based on the generated and updated synonym dictionary 8.

Update of the CT system table 33, the ST system table 34, and the morpheme dictionary 35 based on a similarity between words calculated in consideration of a curvature of a curved surface of a hyperbolic space (a synonyms, a near-synonym, or a co-occurrence relationship between morphemes) can increase the accuracy of definitions of each of the words, and also the accuracy of the semantic representation generating processes to be described later.

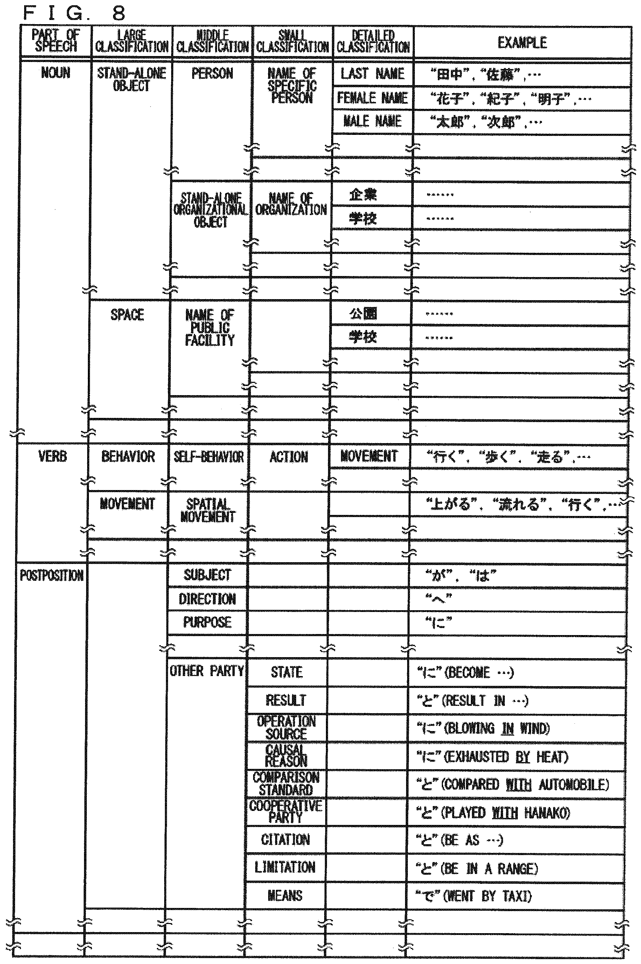

FIG. 8 is a diagram for describing the CT system table 33 according to Embodiment 2.

The concept information is recorded in the CT system table 33. The concept information hierarchically and ambiguously expresses meanings of morphemes of all word classes in Japanese as a natural language, that is, morphemes of content words such as nouns, verbs, and adjectives as well as morphemes of function words such as postpositions and auxiliary verbs.

As illustrated in the example of FIG. 8, for example, a noun "公園" (kouen/a park) and a noun "学校" (gakkou/a school) are recorded with "name of public facility" as a high-level concept and with "space" as a higher-level concept. The noun "学校" (gakkou/a school) is also recorded with "name of organization" as a high-level concept, with "stand-alone organizational object" as a higher-level concept, and with "stand-alone object" as a still higher-level concept. In other words, the concept information hierarchically and ambiguously representing meanings of "学校" (gakkou/a school) is recorded.

For example, a postposition "に" (ni) is recorded to indicate "state", "operation source", or "causal reason" as a concept representing the meaning, and with "other party" as a high-level concept. In other words, the concept information hierarchically and ambiguously representing meanings of the postposition "に" (ni) is recorded.

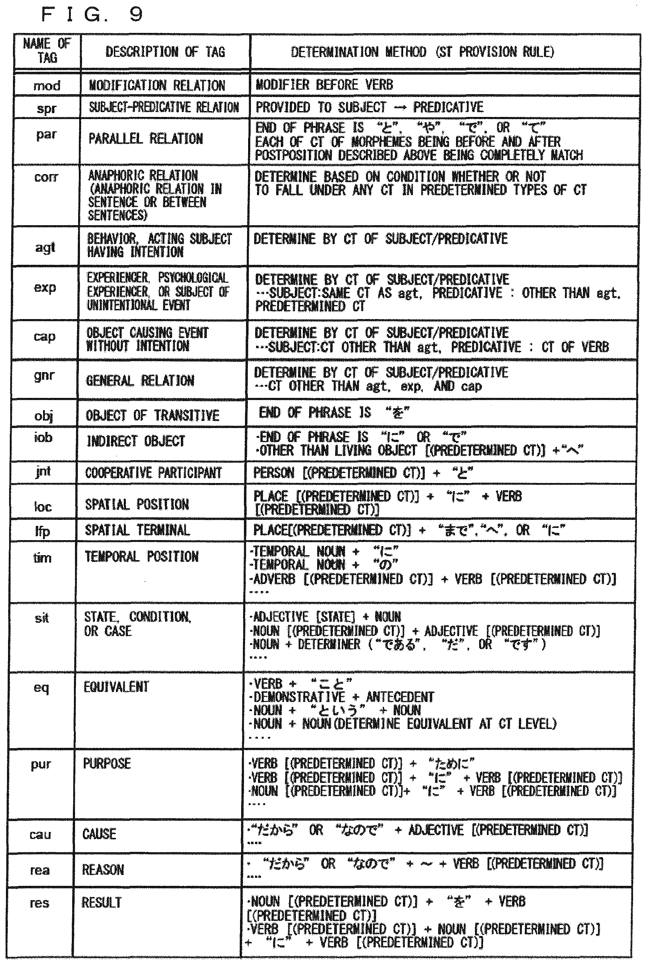

FIGS. 9 to 11 are diagrams for describing the ST system table 34 according to Embodiment 2.

FIG. 9 describes a part of the ST system table 34 regarding a semantic tag (ST) which should be provided between a phrase and a phrase (a pair of phrases) semantically related in text data described in Japanese as natural language data.

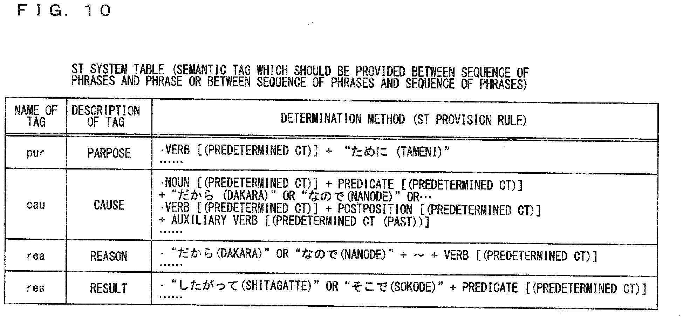

FIG. 10 describes a part of the ST system table 34 regarding a semantic tag which should be provided between a sequence of phrases and a sequence of phrases or between a sequence of phrases and a phrase semantically related in text data described in Japanese.

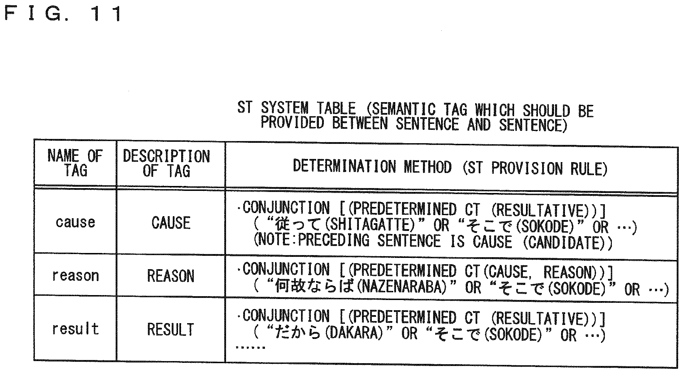

FIG. 11 describes a part of the ST system table 34 regarding a semantic tag which should be provided between a sentence and a sentence (a pair of sentences) semantically related in text data described in Japanese.

The ST system table 34 is a table associating a rule for determining a pair of phrases to which one of a plurality of semantic tags should be provided with each of the semantic tags. The semantic tags indicate pieces of semantic information each representing a semantic relation between a phrase and a phrase in Japanese as the natural language.

As illustrated in the example of FIG. 9, a method of determining a target (herein, a pair of phrases) to which a semantic tag "agt" indicating semantic information "doer, acting subject having intention" should be provided as semantic information representing a semantic relation between a phrase and a phrase is provided as a rule of providing the semantic tag.

In other words, according to the determination method (ST provision rule) corresponding to the semantic tag "agt" in the ST system table 34 in FIG. 9, the semantic tag "agt" is provided to a pair of phrases in a subject-predicate relation which includes a morpheme to which a predetermined concept tag (predetermined CT) is provided.

The predetermined concept tag (predetermined CT) herein is specifically selected based on the CT system table 33 in accordance with semantic information representing a semantic relation of a pair of phrases to which this semantic tag "agt" should be provided. The same applies to a "predetermined CT" used for defining a determination method (ST provision rule) corresponding to another semantic tag. An appropriate CT is selected based on the CT system table 33 in accordance with semantic information representing a semantic relation of a pair of phrases to which the semantic tag should be provided.

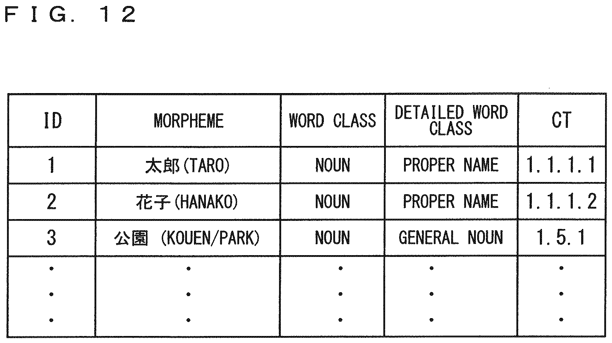

FIG. 12 is a diagram for describing the morpheme dictionary 35 according to Embodiment 2.

The morpheme dictionary 35 describes a word class of each morpheme, a detailed word class of the morpheme, and a relationship with hierarchical classification in the CT system table 33 (described in numbers in FIG. 12). The word class, the detailed word class, and the relationship are associated to each other for each morpheme.

[Semantic representation generating processes]

As described above, the CPU 21 in the computer 20 executes the semantic representation generating program 31 to perform the semantic representation generating processes on text data of a natural language as an analysis target document.

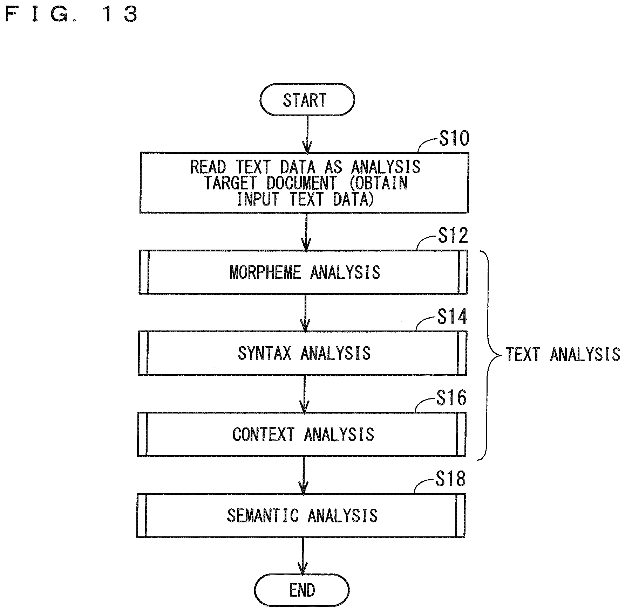

FIG. 13 is a flow chart illustrating an example procedure of the semantic representation generating processes. The semantic representation generating processes include a morpheme analysis, a syntax analysis, a context analysis, and a semantic analysis.

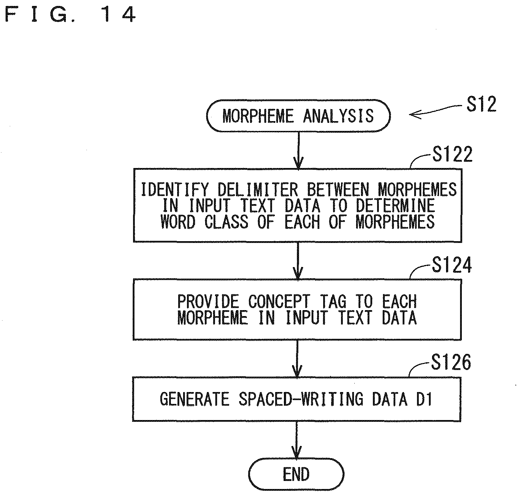

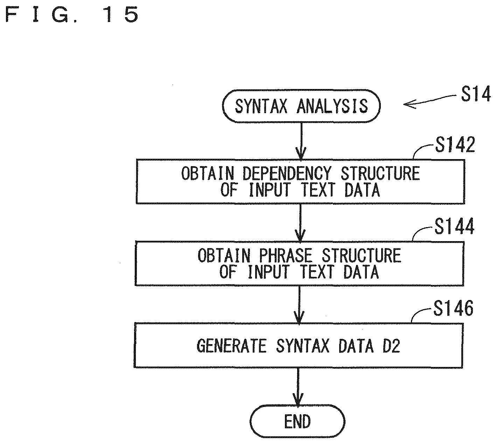

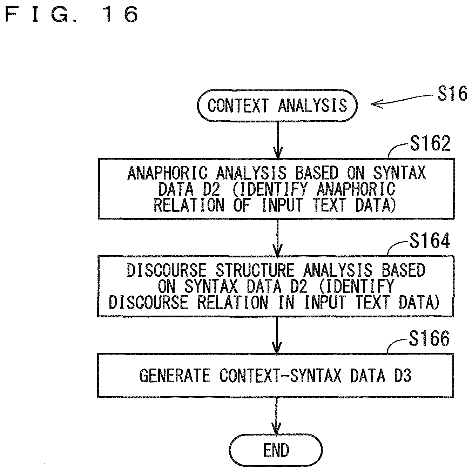

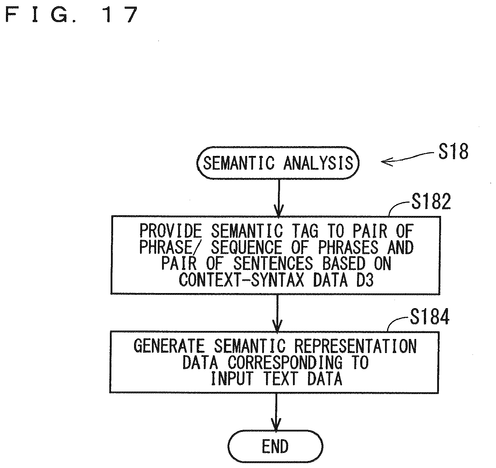

FIG. 14 is a flow chart illustrating an example procedure of the morpheme analysis. FIG. 15 is a flow chart illustrating an example procedure of the syntax analysis. FIG. 16 is a flow chart illustrating an example procedure of the context analysis. FIG. 17 is a flow chart illustrating an example procedure of the semantic analysis.

In the description hereinafter, the morpheme analysis, the syntax analysis, and the context analysis will be collectively referred to as "text analysis". In Embodiment 2, the CPU 21 executes the semantic representation generating program 31, so that the computer 20 operates as illustrated in the examples of FIG. 13 to FIG. 17.

As illustrated in the example of FIG. 13, first, the text data 32 is partially or wholly read from the auxiliary storage 23 based on a command of an input operation by a user on the input operation part 24, and is stored in the main memory 22 as the input text data Din (Step S10). The CT system table 33, the ST system table 34, and the morpheme dictionary 35 may be appropriately referenced during the semantic representation generating processes while being stored in the auxiliary storage 23. Alternatively, the CT system table 33, the ST system table 34, and the morpheme dictionary 35 may be read from the auxiliary storage 23 and stored in the main memory 22 in Step S10 to accelerate the semantic representation generating processes.

Next, the morpheme analysis is performed on the input text data Din (Step S12). As illustrated in the example of FIG. 14, a delimiter between morphemes included in the input text data Din is identified in the morpheme analysis to determine a word class of each of the morphemes (Step S122).

Subsequently, the concept tag (CT) is provided to each of the morphemes in the input text data Din with reference to the CT system table 33 (Step S124). As described above, the CT system table 33 records the concept information hierarchically and ambiguously representing the meanings of the morphemes used in the natural language (see FIG. 8). In providing the concept tag to each morpheme in the input text data Din, the concept tag corresponding to the morpheme is searched in order from the lowest concept (including an example) toward an upper concept in the CT system table 33, and the concept tag first determined to correspond to the morpheme is provided to the morpheme.

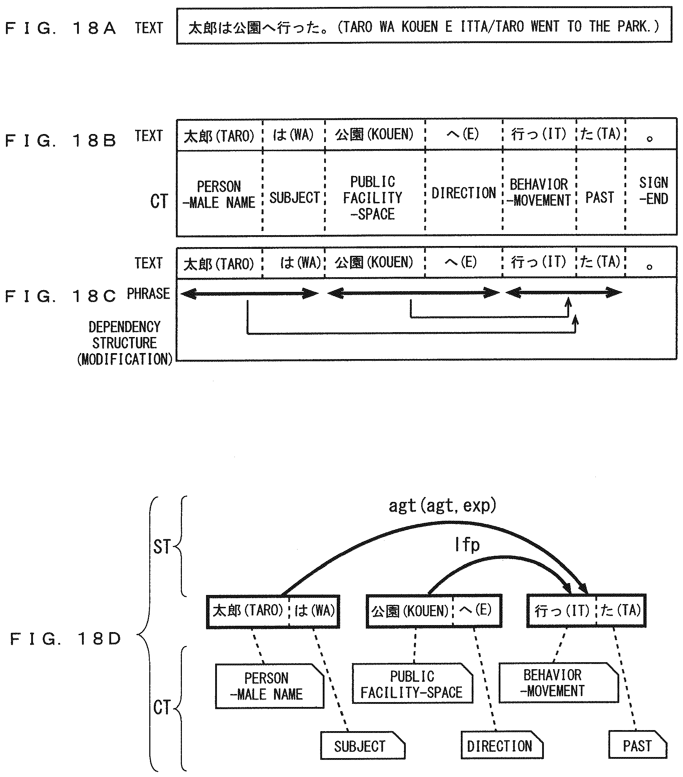

Provision of the concept tag to each morpheme in the input text data Din will be described with reference to FIGS. 18A to 18D.

FIGS. 18A to 18D are diagrams for describing the semantic representation generating processes according to Embodiment 2 based on a specific example. Herein, the input text data Din includes a sentence (text) illustrated in FIG. 18A, that is, "太郎は公園へ行った。" (Taro wa kouen e itta/Taro went to the park). The semantic representation generating processes will be described with a focus on this text.

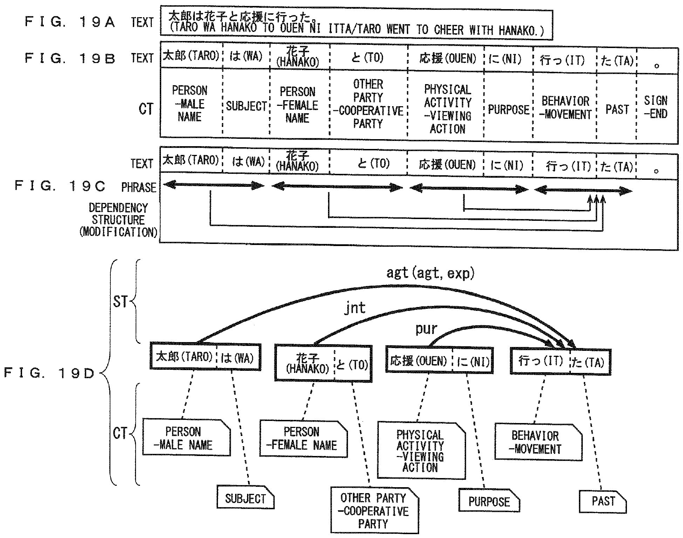

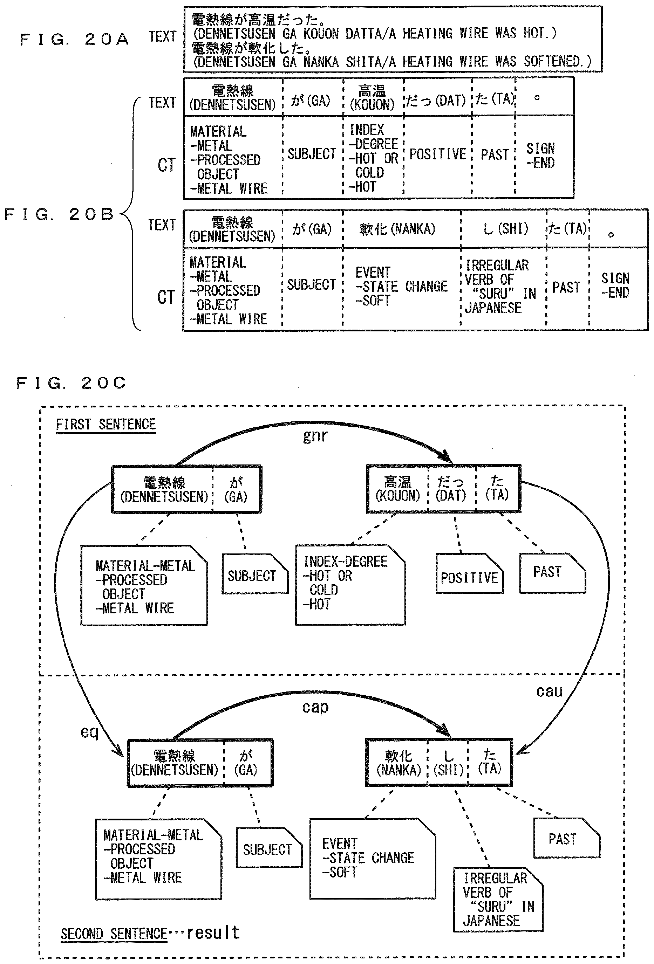

According to Steps S122 and S124, this text is divided into seven morphemes, and the concept tag (CT) is provided to each of the morphemes as illustrated in FIG. 18B. In FIG. 18B, dotted lines extending in a vertical direction show delimiters between the morphemes (the same applies to FIGS. 19B to 19D and 20B and 20C). Data divided into morphemes each of which is provided with a concept tag and a word class as illustrated in FIG. 18B will be hereinafter referred to as "spaced-writing data".

Next, based on the delimiters between the morphemes and provision of the word class and the concept tag to each of the morphemes in the input text data Din in Steps S122 and S124, the spaced-writing data D1 corresponding to the input text data Din is generated (Step S126). When the spaced-writing data D1 is generated, the morpheme process (Step S12) is finished, and the processes proceed to Step S14 in FIG. 13 for performing the syntax analysis.

In the syntax analysis (Step S14) in the example of FIG. 15, based on the spaced-writing data D1, a dependency structure in the input text data Din, that is, a modification structure of the phrases in the input text data Din is obtained (Step S142), and a phrase structure in the input text data Din is obtained (Step S144). Herein, the phrase structure indicates a structure indicating how phrases are formed from morphemes included in the input text data Din and how a sequence of phrases is formed from the phrases, that is to say, a hierarchical structure of a sentence made up of the morphemes, the phrases, and the sequence of phrases.

According to these Steps S142 and S144, for example, the dependency structure and the phrase structure are obtained as illustrated in FIG. 18C, based on the spaced-writing data D1 (FIG. 18B) corresponding to the text in FIG. 18A. The text in FIG. 18A does not include a sequence of phrases, but is made up of three phrases ( "太郎は " (Taro wa/Taro), "公園へ " (kouen e/to the park), and "行った " (itta/went)) as illustrated in FIG. 18C. These phrases have a modification relation as illustrated in FIG. 18C.

Subsequently, this syntax analysis generates the syntax data D2 representing a structure of each sentence included in the input text data Din (the dependency structure and the phrase structure), based on the dependency structure and the phrase structure obtained as described above (Step S146). When the syntax data D2 is generated, the syntax analysis (Step S14) is finished, and the processes proceed to Step S16 in FIG. 13 for performing the context analysis.

As illustrated in the example of FIG. 16, in the context analysis (Step S16), an anaphoric analysis on the input text data Din based on the syntax data D2 identifies an antecedent referenced by an anaphor included in the input text data Din (Step S162). A discourse structure analysis on the input text data Din based on the syntax data D2 identifies a pair of sentences having a discourse relation in the input text data Din, that is, a pair of sentences semantically related to each other (Step S164). Subsequently, context data representing an anaphoric relation and a discourse relation in the input text data Din is generated based on these identified results, and the context-syntax data D3 is generated from the context data and the syntax data D2. When the context-syntax data D3 is generated, the context analysis (Step S16) is finished, and the processes proceed to Step S18 in FIG. 13 for performing the semantic analysis.

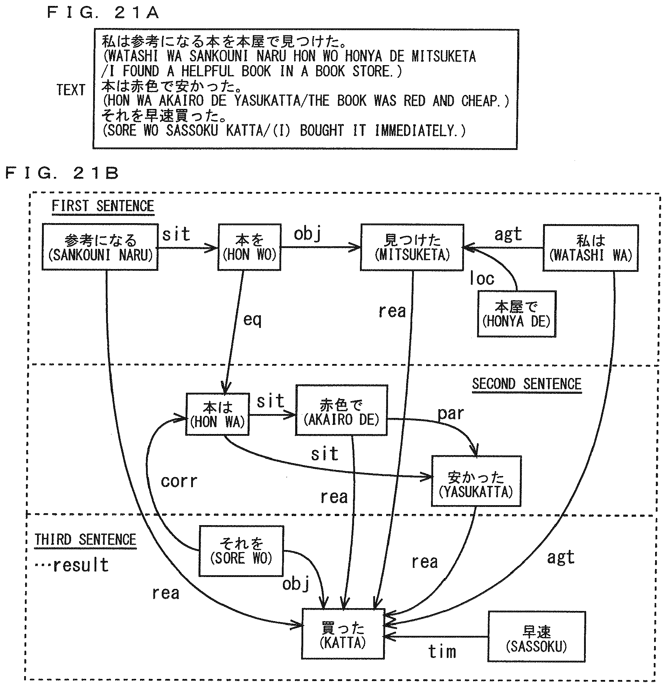

Usage of the context-syntax data D3 obtained by such anaphoric analysis and discourse structure analysis will be described in relation to second and third generation examples of the semantic representation data to be described later (see FIGS. 20A to 20C, and 21A, and 21B).

As illustrated in FIG. 17, in the semantic analysis (Step S18), a semantic tag is provided between a phrase and a phrase (a pair of phrases), between a sequence of phrases and a phrase, and between a sequence of phrases and a sequence of phrases (a pair of sequences of phrases) each having a modification relation in the input text data Din, based on the context-syntax data D3 with reference to the ST system table 34. Furthermore, a semantic tag is provided between a sentence and a sentence (a pair of sentences) having an anaphoric relation or a discourse relation in the input text data Din, based on the context-syntax data D3.

Hereinafter, phrases, sequences of phrases, and sentences will be collectively referred to as "text constituent elements". This description will proceed, assuming that a pair of text constituent elements having a modification relation or a discourse relation are semantically related to each other.

When the semantic tag is provided to the pair of text constituent elements included in the input text data Din in Step S182, the semantic representation data 140 corresponding to the input text data Din is generated based on the concept tag provided to each morpheme in the input text data Din and the semantic tag provided to the pair of text constituent elements having the semantic relation in the input text data Din (Step S184).

For example, the semantic representation data illustrated in the example of FIG. 18D is generated from the text illustrated in FIG. 18A. In the semantic representation illustrated in FIG. 18D, the phrases as the text constituent elements are nodes, and an edge is provided between the nodes semantically related to each other (between the phrases having a modification relation). Then, the semantic tag (ST) indicating semantic information representing a semantic relation is provided to the edge, and the concept tag (CT) indicating concept information representing each meaning is provided to each of the morphemes.

In the computer 20 as the semantic representation generating apparatus 10 according to Embodiment 1, the semantic representation data 140 of an appropriate data structure (a data structure appropriate for processes in the computer 20) corresponding to the semantic representation illustrated in FIG. 18D is generated in the main memory 22, and is appropriately stored in the auxiliary storage 23, for example.

In the semantic representation illustrated in FIG. 18D, a semantic tag "lfp" indicating semantic information indicating "spatial terminal" representing a semantic relation between two phrases "公園へ " (kouen e/ to the park) and "行った " (itta/went) is provided between the two phrases (see FIG. 9). A semantic tag "agt" indicating semantic information "doer, acting subject having intention" representing a semantic relation between two phrases "太郎は " (Taro wa/Taro) and "行った " (itta/went) is provided between the two phrases. However, a semantic relation represented by semantic information "experiencer, ..." indicated by a semantic tag "exp" may be determined to represent a modification relation of these phrases depending on a determination method (ST provision rule) in the ST system table 34 (see FIG. 9). In this case, the two semantic tags "agt" and "exp" are provided between "太郎は " (Taro walTaro) and "行った " (ittalwent).

After the semantic representation data 140 is generated in Step S184, the semantic analysis (Step S18) is finished. As illustrated in FIG. 13, the semantic representation generating processes according to Embodiment 2 have been finished by finishing this semantic analysis.

Processes of a well-known method or a publicly known method may be adopted to the specific processes of the morphological analysis (FIG. 14), the syntax analysis (FIG. 15), and the context analysis (FIG. 16) in the semantic representation generating processes (FIG. 13) according to Embodiment 2, except for the provision of the concept tag based on the CT system table 33 (FIG. 8). Thus, the specific processes are not limited to the processes described above.

[Generation example of semantic representation data]

[First generation example]

FIGS. 19A to 19D are diagrams for describing a first generation example of the semantic representation data according to Embodiment 2. In other words, FIGS. 19A to 19D are diagrams for describing what type of the semantic representation data is generated from a text made up of one sentence in FIG. 19A by the semantic representation generating processes (FIG. 13) when such a text is included in the input text data Din.

In this example, the text in FIG. 19A is divided into nine morphemes as illustrated in FIG. 19B by the morphological analysis (Step S12) in the semantic representation generating processes, and the concept tag (CT) is provided to each of the morphemes.

With a focus on morphemes of postpositions "は" (wa) and "と" (to) in this text, concept information provided on "は" (wa) in the CT system table 33 does not hierarchically express a meaning thereof, however, concept information provided on "と" (to) in the CT system table 33 hierarchically and ambiguously represents a meaning thereof. In other words, as illustrated in FIG. 8, a concept representing a meaning of the postposition "と" (to) is recorded as "result", "comparison standard", "cooperative party", "citation", or "limitation", and an upper concept of these concepts is recorded as "other party".

As illustrated in FIG. 19B, a concept tag indicating concept information of "other party-cooperative party" is provided to the postposition "と" (to) in this example. In a stage of the morphological analysis, a plurality of concept tags may be ambiguously provided to a morpheme having ambiguous meanings such as the preposition "と" (to). However, when a semantic tag is provided to a pair of text constituent elements (pair of phrases etc.,) in a stage of the semantic analysis (S182 in FIG. 17), in a case where the plurality of provided concept tags have meanings opposite to each other, the concept tags are provided again to the morpheme in accordance with the concept tags of morphemes before and after the morpheme in the text to be analyzed.

Next, a dependency structure and a phrase structure of the text in this example (FIG. 19C) are obtained by the syntax analysis (Step S14) as illustrated in FIG. 19C.

After the context analysis (Step S16), the semantic analysis (Step S18) is performed. This semantic analysis provides semantic tags (e.g., "agt", "jnt", and "pur") to the pairs of the text constituent elements semantically related to each other in the text of this example (herein, three pairs of phrases each having a modification relation). The semantic representation data as illustrated in the example of FIG. 19D is generated as the semantic representation data corresponding to the text of this example (FIG. 19A), based on the concept tag provided to each of the morphemes and the semantic tags provided to the pairs of the text constituent elements semantically related to each other.

In this semantic representation data, the semantic tag ("agt" or "agt, exp") provided between the two phrases "太郎は" (Taro walTaro) and "行った" (itta/went) is the same as that in the example illustrated in FIGS. 18A to 18D. A semantic tag "jnt" indicating semantic information "cooperative participant" representing a semantic relation between the two phrases "花子と" (Hanako to/with Hanako) and "行った" (ittalwent) is provided between the two phrases, based on a determination method (an ST provision rule for determining the semantic tag which should be provided between a phrase and a phrase) in the ST system table 34 in FIG. 9. A semantic tag "pur" indicating semantic information "purpose" representing a semantic relation between the two phrases "応援に" (ouen ni/to cheer) and "行った" (itta/went) is provided between the two phrases, based on the determination method in the ST system table 34 in FIG. 9.

**EP 4 432 156 A1**

[Second generation example]

FIG. 20A to FIG. 20C are diagrams for describing a second generation example of the semantic representation data according to Embodiment 2. In other words, FIGS. 20A to 20C are diagrams for describing what type of the semantic representation data is generated from a text made up of two sentences in FIG. 20A by the semantic representation generating processes (FIG. 13) when such a text is included in the input text data Din.

In this example, each of a first sentence "電熱線 が 高温 だ っ た 。" (Dennetsusen ga kouon datta/A heating wire was hot.) and a second sentence "電熱線が 軟化 した。" (Dennetsusen ga nanka shita/A heating wire was softened.) in the text of FIG. 20A is divided into six morphemes as illustrated in FIG. 20B by the morphological analysis (Step S12) in the semantic representation generating processes. Then, the concept tag (CT) is provided to each of the morphemes.

After the syntax analysis (Step S14) and the context analysis (Step S16), the semantic analysis (Step S18) is performed. This semantic analysis provides semantic tags ("gnr" and "cap") to the pairs of the text constituent elements (a pair of phrases having a modification relation in the first sentence and a pair of phrases having a modification relation in the second sentence) semantically related to each other in the text of this example (FIG. 20A). The semantic representation data as illustrated in the example of FIG. 20C is generated as the semantic representation data corresponding to the text of this example, based on the concept tag provided to each of the morphemes and the semantic tags provided to the pairs of the text constituent elements semantically related to each other.

In this semantic representation data, the semantic tag "gnr" indicating semantic information "general relation" representing a semantic relation between the two phrases "電熱線が" (Dennetsusen ga/A heating wire) and "高温だった" (kouon datta/was hot) in the first sentence is provided between the two phrases based on a determination method (an ST provision rule for determining the semantic tag which should be provided between a phrase and a phrase) in the ST system table 34 illustrated in FIG. 9. The semantic tag "cap" indicating semantic information "object causing event without intention" representing a semantic relation between the two phrases "電熱線が" (Dennetsusen ga/A heating wire) and "軟化した" (Nanka shita/was softened) in the second sentence is provided between the two phrase. A semantic tag "eq" indicating semantic information "equivalent" representing a semantic relation between the phrase "電熱線が" (Dennetsusen ga/A heating wire) in the first sentence and the phrase "電熱線が" (Dennetsusen ga/A heating wire) in the second sentence is provided between those phrases based on the context-syntax data D3 in this example.

In the semantic representation data, the second sentence "電熱線が軟化した。" (Dennetsusen ga nanka shita/A heating wire was softened.) is determined to fall under "result" based on the context-syntax data D3 in this example. As illustrated in the example of FIG. 20C, a semantic tag "cau" (cause) indicating semantic information representing a semantic relation between the phrase "高温だった" (kouon datta/was hot) corresponding to a predicate of the first sentence and the phrase "軟化した" (nanka shita/was softened) corresponding to a predicate of the second sentence is provided between those two phrases (an edge from "高温だった" (kouon datta/was hot) toward "軟化 した" (nanka shita/was softened)), based on the determination result and the above semantic tags "gnr", "cap", and "eq" provided between the phrases in this example.

[Third generation example]

FIGS. 21A and 21B are diagrams for describing a third generation example of the semantic representation data according to Embodiment 2. In other words, FIGS. 21A and 21B are diagrams for describing what type of the semantic representation data is generated from a text made up of three sentences illustrated in FIG. 21A by the semantic representation generating processes (FIG. 13) when such a text is included in the input text data Din.

In this example, the semantic analysis (Step S18) is performed on the text of a first sentence "私は参考になる本を本屋で見つけた。" (Watashi wa sankou ni naru hon wo honya de mitsuketa/I found a helpful book in a book store.), a second sentence "本 は赤色で安かった。" (Hon wa akairo de yasukatta/The book was red and cheap.), and a third sentence "それを早速買った。" (Sore wo sassoku kattal(I) bought it immediately.) in FIG. 21A after the morphological analysis (Step S12), the syntax analysis (Step S14), and the context analysis (Step S16) in the semantic representation generating processes to divide the text into morphemes. Then, the concept tag (CT) is provided to each of the morphemes (see FIG. 8). The semantic tag is provided between the text constituent elements having the semantic relation in the text of this example (the pair of text constituent elements), thus generating the semantic representation data as illustrated in the example of FIG. 21B.

In the semantic representation data, a semantic tag "sit" indicating semantic information "state, condition, or case" representing a semantic relation between two phrases "参考になる" (sankou ni naru/helpful) and "本を" (hon wo/book) is provided between the two phrases in the first sentence, based on the determination method (the ST provision rule for determining the semantic tag which should be provided between the phrases) of the ST system table 34 illustrated in FIG. 9. A semantic tag "obj" indicating semantic information "object of transitive" representing a semantic relation between two phrases "本を" (hon wo/book) and "見つけた" (mitsuketalfound) is provided between the two phrases. A semantic tag "loc" indicating semantic information "spatial position" representing a semantic relation between two phrases "本屋で" (honya de/in a book store) and "見つけた" (mitsuketa/found) is provided between the two phrases. A semantic tag "agt" indicating semantic information "doer, acting subject having intention" representing a semantic relation between two phrases "私は" (Watashi wa/I) and "見つけた" (mitsuketalfound) is provided between the two phrases.

In the second sentence, the semantic tag "sit" indicating semantic information "state, condition, or case" representing a semantic relation between two phrases "本は" (Hon wa/book) and "赤色で" (akairo de/is red) is provided between the two phrases. The semantic tag "sit" indicating semantic information "state, condition, or case" representing a semantic relation between two phrases "本は" (Hon wa/book) and "安かった" (yasukattalis cheap) is also provided between the two phrases. A semantic tag "par" indicating semantic information "parallel relation" representing a semantic relation between two phrases "赤色で" (akairo de/is red) and "安かった" (yasukatta/is cheap) is provided between the two phrases.

In the third sentence, the semantic tag "obj" indicating semantic information "object of transitive" representing a semantic relation between two phrases "それを" (Sore wo/it) and "買った" (katta/bought) is provided between the two phrases. Furthermore, a semantic tag "tim" indicating semantic information "temporal position" representing a semantic relation between two phrases "早速" (sassoku/immediately) and "買った" (katta/bought) is also provided between the two phrases.

A semantic tag "eq" indicating semantic information "equivalent" representing a semantic relation between the phrase "本を" (hon wo/book) in the first sentence and the phrase "本は" (hon wa/book) in the second sentence is provided between the two phrases based on the context-syntax data D3 in this example. A semantic tag "corr" indicating semantic information "anaphoric relation" representing a semantic relation between the phrase "それを" (Sore wo/it) in the third sentence and the phrase "本は" (hon wa/book) in the second sentence is provided between the two phrases based on the context-syntax data D3 in this example. The semantic tag "agt" indicating semantic information "doer, acting subject having intention" representing a semantic relation between the phrase "私は" (Watashi wa/I) in the first sentence and the phrase "買った" (katta/bought) in the third sentence is provided between the two phrases based on the context-syntax data D3 in this example.

In this semantic representation data, the third sentence "それを早速買った" (Sore wo sassoku kattal(I) bought it immediately.) is determined to fall under "result" based on the context-syntax data D3 in this example. A semantic tag "rea" (reason) indicating semantic information representing a semantic relation between the phrase "見つけた" (mitsuketalfound) corresponding to a predicate of the first sentence and the phrase "買った" (katta/bought) corresponding to a predicate of the third sentence is provided between those two phrases as illustrated in FIG. 21B, based on the determination result and the above semantic tags provided between the phrases in this example.

In the similar manner, the semantic tag "rea" (reason) indicating semantic information representing a semantic relation between the phrase "参考になる" (sankou ni naru/helpful) in the first sentence and the phrase "買った" (katta/bought) in the third sentence, between the phrase "赤色で" (akairo de/is red) in the second sentence and the phrase "買った" (katta/bought) in the third sentence, and between the phrase "安かった" (yasukatta/is cheap) in the second sentence and the phrase "買った" (katta/bought) in the third sentence is also provided between those phrases.

[Advantages produced by Embodiments above]

Next, example advantages produced by Embodiments above will be described. Although the advantages will be described based on the specific structures whose examples are described in Embodiments above, the structures may be replaced with another specific structure whose example is described in this DESCRIPTION as long as it produces the same advantages. Specifically, although only one of the specific structures is sometimes described as a representative for convenience, the structure may be replaced with another specific structure associated with the structure described as the representative.

Such replacement may be performed across a plurality of Embodiments. Specifically, such replacement may be performed when combined structures whose examples are described in different Embodiments produce the same advantages.

According to Embodiments above, the similarity calculation apparatus 1 includes the distance calculator 12 and the determination part 14. The distance calculator 12 calculates a distance between vectors defined for words. The determination part 14 determines a pair of the words corresponding to the vectors to be synonyms when the distance between the vectors is smaller than or equal to a predefined distance. The distance calculator 12 calculates, as the distance between the vectors, a curvilinear surface distance between the vectors in a hyperbolic space in which the vectors are defined.

Under this configuration, defining each of the vectors in the hyperbolic space and calculating the distance between the vectors in consideration of a curvature of a curved surface of the hyperbolic space can avoid a problem that disregards an IDF, and increase the accuracy of calculating the similarity. Since a range of values that can be indicated by distances between vectors in consideration of a curvature of a curved surface of a hyperbolic space is wider than a range of values that can be indicated by cosine similarities under the configuration, the accuracy of calculating the similarity can be increased.

When the other structures whose examples are described in the DESCRIPTIPTION are appropriately added to the structure above, that is, the other structures in the DESCRIPTIPTION which are not mentioned as the structure above are appropriately added, the same advantages can be produced.

According to Embodiments above, each of the vectors is described by Euclidean coordinates. The curvilinear surface distance is a value obtained by multiplying a distance between the Euclidean coordinates of the vectors by a curvature of a curved surface between the vectors. Under the structure, calculating the distance between the vectors in consideration of the curvature of the curved surface of the hyperbolic space can increase the accuracy of calculating the similarity.

According to Embodiments above, the curvature is represented by a norm of a vector product of the vectors. Under the structure, calculating the distance between the vectors in consideration of the curvature of the curved surface of the hyperbolic space can increase the accuracy of calculating the similarity.

According to Embodiments above, the determination part 14 associates the pair of words determined to be the synonyms with each other, and registers the pair of words in the synonym dictionary 8. Under this configuration, registering a pair of words whose similarity has been calculated with high accuracy in the synonym dictionary 8 can define the words with high accuracy when the morpheme dictionary 35, the CT system table 33, and the ST system table 34 are updated using the synonym dictionary 8.

According to Embodiments above, the semantic representation generating apparatus 10 includes the CT system table 33, the text analysis part, and the semantic analysis part 118. The CT system table 33 records concept information hierarchically and ambiguously representing meanings of morphemes of a group of word classes in a natural language. The text analysis part receives text data described in the natural language, and performs a superficial analysis including a syntax analysis on the text data to generate syntax data representing a structure of a sentence included in the text data. The semantic analysis part 118 generates the semantic representation data corresponding to the text data, based on the syntax data. The CT system table 33 is updated based on the pair of words associated with each other in the synonym dictionary 8. The text analysis part provides a concept tag to each of the morphemes included in the text data, based on the syntax data with reference to the CT system table 33, the concept tags indicating the concept information hierarchically representing the meanings of the morphemes. The semantic analysis part 118 provides a semantic tag to a pair of a phrase or a sequence of phrases which correspond to a predicate and an other phrase or an other sequence of phrases which have a modification relation with the predicate, based on the syntax data, the semantic tag indicating semantic information representing a semantic relation between the pair, the phrase or the sequence of phrases and the other phrase or the other sequence of phrases being included in the text data. The semantic analysis part 118 generates the semantic representation data, based on the concept tag provided to each of the morphemes included in the text data and the semantic tag provided to the pair of the phrase or the sequence of phrases and the other phrase or the other sequence of phrases that are included in the text data.

This configuration can provide, in the morpheme analysis (FIGS. 13 and 14) on the input text data Din as the natural language data, the concept tag (CT) to not only a morpheme of a content word such as a noun or a verb but also a morpheme of a function word such as a postposition (see FIGS.18B, 19B, and 20B) with reference to the CT system table 33 (FIG. 8) in which concept information hierarchically and ambiguously representing meanings of morphemes of all word classes are recorded, and generate the semantic representation data 140 (for example, FIGS. 18D, 19D, and 20C) based on the provision of the concept tags to the morphemes in the semantic analysis (FIGS. 13 and 17). This produces the semantic representation data more appropriately representing meanings of words included in the natural language than by the conventional technologies.

Furthermore, the semantic analysis (FIG. 17) is performed on the input text data Din as the natural language data after the morphological analysis (FIG. 14) including the provision of the concept tags to the morphemes, the syntax analysis (FIG. 15), and the context analysis (FIG. 16). In the semantic analysis, the semantic tag (ST) is provided to each pair of text constituent elements (phrases, sequences of phrases, or sentences) semantically related in the input text data Din with reference to the ST system table 34. Then, the semantic representation data 140 is generated (for example, FIGS. 18D, 19D, and 20C) based on the provision of the concept tags to the morphemes and the provision of the semantic tags to the pairs of such text constituent elements. As illustrated in the example of FIG. 9, the ST system table 34 referenced at this time provides the ST provision rule (the method of determining to which type of a pair of text constituent elements the semantic tag should be provided) to each of the plurality of semantic tags each representing plural pieces of semantic information representing a semantic relation of the pair of text constituent elements (phrases, sequences of phrases, or sentences) semantically related in the natural language, regardless of whether the text constituent elements are text constituent elements of phrases corresponding to a predicate. This produces the semantic representation data more appropriately and sufficiently representing not only meanings of words but also meanings of a sentence or sentences from the natural language data than by the conventional technologies. The ST provision rules provided in the ST system table 34 include a rule defining a pair of text constituent elements to which the semantic tag should be provided, using concept tags (CTs) of morphemes included in the pair thereof. Such an ST provision rule can more properly determine the semantic tag which should be provided to the pair of text constituent elements.

When the semantic representation data generated by this configuration is used for obtaining knowledge from natural language data or for a question answering system by a natural language, the accuracy of obtaining the knowledge and the reusability of the obtained knowledge can be increased.

According to Embodiments above, the similarity calculation program causes a computer to calculate a distance between vectors defined for words. The similarity calculation program causes the computer to determine a pair of the words corresponding to the vectors to be synonyms when the distance between the vectors is smaller than or equal to a predefined distance. The distance between the vectors is a curvilinear surface distance between the vectors in a hyperbolic space in which the vectors are defined.

Under this configuration, calculating the distance between the vectors in consideration of a curvature of a curved surface of the hyperbolic space can increase the accuracy of calculating the similarity.

The program may be recorded in a computer-readable removable recording medium (a non-transitory recording medium) such as a magnetic disc, a flexible disk, an optical disk, a compact disk, a Blu-Ray disc (trademark), or a DVD. A removable recording medium in which a program that performs the aforementioned functions has been recorded may be commercially distributed.

According to Embodiments above, a similarity calculation method includes calculating a distance between vectors defined for words. The method includes determining a pair of the words corresponding to the vectors to be synonyms when the distance between the vectors is smaller than or equal to a predefined distance. The calculating includes calculating, as the distance between the vectors, a curvilinear surface distance between the vectors in a hyperbolic space in which the vectors are defined.

Under this configuration, calculating the distance between the vectors in consideration of a curvature of a curved surface of the hyperbolic space can increase the accuracy of calculating the similarity.

[Modifications of Embodiments above]

Although Embodiments described above specify dimensions, shapes, relative arrangement relationships, and conditions for implementation of each of the constituent elements, these are in all aspects illustrative and are not restrictive of Embodiments.

Therefore, numerous modifications and equivalents that have not yet been exemplified will be devised within the scope of the technologies disclosed in the DESCRIPTIPTION. Examples of the numerous modifications and equivalents include a case where at least one constituent element is modified, added, or omitted, and further a case where at least one constituent element in at least one of Embodiments is extracted and combined with a constituent element in the other Embodiment.

In Embodiments, the input text data Din for generating the semantic representation data is text data described in Japanese. However, a semantic representation generating apparatus or a method of generating semantic representation that are constructed similarly to those according to Embodiments can generate the semantic representation data from text data of another natural language, for example, input text data Din that is text data in English.

As illustrated in FIG. 8, concepts representing meanings of morphemes in the natural language are hierarchically classified in the CT system table 33 according to Embodiments. Since the hierarchical classification illustrated in FIG. 8 is illustrative, the concepts representing the meanings of morphemes in the natural language may be hierarchically classified in another aspect.

The ST provision rule corresponding to each semantic tag in the ST system table 34 according to Embodiments may be defined in a form different from those illustrated in the examples of FIGS. 9 to 11.

Furthermore, the ST system table 34 according to Embodiments provides the ST provision rule to a pair of text constituent elements (phrases, sequences of phrases, or sentences) semantically related in the natural language, regardless of whether the text constituent elements are text constituent elements of phrases corresponding to a predicate. Instead, the ST provision rule may be provided to a pair of text constituent elements only when one of the pair of text constituent elements semantically related in the natural language is a phrase corresponding to a predicate as with conventional provision of a deep case etc.

While the invention has been shown and described in detail, the foregoing description is in all aspects illustrative and not restrictive. It is therefore understood that numerous modifications and variations can be devised without departing from the scope of the invention.

**Claims**

1. A similarity calculation apparatus that calculates a similarity between words, the apparatus comprising:

   a distance calculator (12) calculating a distance between vectors defined for the words; and
   a determination part (14) determining a pair of the words corresponding to the vectors to be synonyms when the distance between the vectors is smaller than or equal to a predefined distance,
   wherein the distance calculator (12) calculates, as the distance between the vectors, a curvilinear surface distance between the vectors in a hyperbolic space in which the vectors are defined.

2. The similarity calculation apparatus according to claim 1,

   wherein each of the vectors is described by Euclidean coordinates, and
   the curvilinear surface distance is a value obtained by multiplying a distance between the Euclidean coordinates of the vectors by a curvature of a curved surface between the vectors.

3. The similarity calculation apparatus according to claim 2,
   wherein the curvature is represented by a norm of a vector product of the vectors.

4. The similarity calculation apparatus according to any one of claims 1 to 3,
   wherein the determination part (14) associates the pair of words determined to be the synonyms with each other, and registers the pair of words in a synonym dictionary (8).

5. A semantic representation generating apparatus that generates semantic representation data from natural language information, the apparatus comprising:

   a concept tag system table (33) recording concept information hierarchically and ambiguously representing meanings of morphemes of a group of word classes in a natural language;
   a text analysis part (112, 114, 116) receiving text data described in the natural language and performing a superficial analysis including a syntax analysis on the text data to generate syntax data representing a structure of a sentence included in the text data; and

a semantic analysis part (118) generating the semantic representation data corresponding to the text data, based on the syntax data,

wherein the concept tag system table (33) is updated based on the pair of words associated with each other in the synonym dictionary (8) according to claim 4,

the text analysis part (112, 114, 116) provides a concept tag to each of the morphemes included in the text data, based on the syntax data with reference to the concept tag system table (33), the concept tags indicating the concept information hierarchically representing the meanings of the morphemes,

the semantic analysis part (118) provides a semantic tag to a pair of a phrase or a sequence of phrases which correspond to a predicate and an other phrase or an other sequence of phrases which have a modification relation with the predicate, based on the syntax data, the semantic tag indicating semantic information representing a semantic relation between the pair, the phrase or the sequence of phrases and the other phrase or the other sequence of phrases being included in the text data, and

the semantic analysis part (118) generates the semantic representation data, based on the concept tag provided to each of the morphemes included in the text data and the semantic tag provided to the pair of the phrase or the sequence of phrases and the other phrase or the other sequence of phrases that are included in the text data.

6. A similarity calculation program (131) including a plurality of commands to be executed by one or more processors and executable by a computer, the similarity calculation program functioning as, using the plurality of commands executed by the one or more processors, the following steps comprising:

causing the computer to calculate a distance between vectors defined for words; and

causing the computer to determine a pair of the words corresponding to the vectors to be synonyms when the distance between the vectors is smaller than or equal to a predefined distance,

wherein the distance between the vectors is a curvilinear surface distance between the vectors in a hyperbolic space in which the vectors are defined.

7. A similarity calculation method of calculating a similarity between words, the method comprising:

calculating a distance between vectors defined for the words; and

determining a pair of the words corresponding to the vectors to be synonyms when the distance between the vectors is smaller than or equal to a predefined distance,

wherein the calculating includes calculating, as the distance between the vectors, a curvilinear surface distance between the vectors in a hyperbolic space in which the vectors are defined.

FIG. 1

F I G. 2

| 40 |
| 41 CPU |
| 44 INPUT OPERATION PART |
| 48 |
| 42 MAIN MEMORY |
| 49 |
| 43 |
| AUXILIARY STORAGE |
| DISPLAY DEVICE 45 |
| SIMILARITY CALCULATION PROGRAM 131 |
| COMMUNICATION INTERFACE DEVICE 46 |
| RECORDING MEDIUM READING DEVICE 47 |
| 30 |

F I G. 3

```
                    ┌─────────────┐
                    │    START    │
                    └──────┬──────┘
                           │           ┌─ S01
                           ▼
        ┌──────────────────────────────────────┐
        │           RECEIVE PIECES OF           │
        │     MULTIDIMENSIONAL VECTOR DATA      │
        └──────────────────┬───────────────────┘
                           │           ┌─ S02
                           ▼
        ┌──────────────────────────────────────┐
        │    CALCULATE DISTANCE BETWEEN VECTORS │
        └──────────────────┬───────────────────┘
                           │           ┌─ S03
                           ▼
        ┌──────────────────────────────────────┐
        │          OUTPUT DISTANCE DATA         │
        └──────────────────┬───────────────────┘
                           │           ┌─ S04          NO
                           ▼
        ⟨        ARE PAIR OF WORDS SYNONYMS?         ⟩───┐
                           │ YES       ┌─ S05           │
                           ▼                            │
        ┌──────────────────────────────────────┐        │
        │          REGISTER PAIR OF WORDS       │        │
        │         IN SYNONYM DICTIONARY         │        │
        └──────────────────┬───────────────────┘        │
                           │◄───────────────────────────┘
                           ▼
                    ┌─────────────┐
                    │     END     │
                    └─────────────┘
```

F I G. 4

FIG. 5

| WORD | SYNONYM |
|---|---|
| 山(YAMA/A MOUNTAIN) | 山岳 (SANGAKU/MOUNTAINS)、高山 (KOUZAN/A HIGH MOUNTAIN)、mountain… |
| 川(KAWA/A RIVER) | 河 (KAWA/A RIVER)、河川 (KASEN/RIVERS)、小川 (OGAWA/A STREAM)、大河 (TAIGA/ A LARGE RIVER)、river… |

FIG. 6

# F I G. 7

20

21 — CPU

22 — MAIN MEMORY

23

AUXILIARY STORAGE

SEMANTIC REPRESENTATION GENERATING PROGRAM — 31

TEXT DATA — 32

MORPHEME DICTIONARY — 35

CT SYSTEM TABLE — 33

ST SYSTEM TABLE — 34

24

INPUT OPERATION PART

— 28

— 29

DISPLAY DEVICE — 25

COMMUNICATION INTERFACE DEVICE — 26

RECORDING MEDIUM READING DEVICE — 27

30

EP 4 432 156 A1

F I G. 8

| PART OF SPEECH | LARGE CLASSIFICATION | MIDDLE CLASSIFICATION | SMALL CLASSIFICATION | DETAILED CLASSIFICATION | EXAMPLE |
|---|---|---|---|---|---|
| NOUN | STAND-ALONE OBJECT | PERSON | NAME OF SPECIFIC PERSON | LAST NAME | "田中", "佐藤", … |
| | | | | FEMALE NAME | "花子", "紀子", "明子", … |
| | | | | MALE NAME | "太郎", "次郎", … |
| | | | | | |
| | | | | | |
| | | STAND-ALONE ORGANIZATIONAL OBJECT | NAME OF ORGANIZATION | 企業 | …… |
| | | | | 学校 | …… |
| | | | | | |
| | | | | | |
| | SPACE | NAME OF PUBLIC FACILITY | | 公園 | …… |
| | | | | 学校 | …… |
| | | | | | |
| | | | | | |
| VERB | BEHAVIOR | SELF-BEHAVIOR | ACTION | MOVEMENT | "行く", "歩く", "走る", … |
| | MOVEMENT | SPATIAL MOVEMENT | | | "上がる", "流れる", "行く", … |
| | | | | | |
| POSTPOSITION | | SUBJECT | | | "が", "は" |
| | | DIRECTION | | | "へ" |
| | | PURPOSE | | | "に" |
| | | | | | |
| | | OTHER PARTY | STATE | | "に" (BECOME …) |
| | | | RESULT | | "と" (RESULT IN …) |
| | | | OPERATION SOURCE | | "に" (BLOWING IN WIND) |
| | | | CAUSAL REASON | | "に" (EXHAUSTED BY HEAT) |
| | | | COMPARISON STANDARD | | "と" (COMPARED WITH AUTOMOBILE) |
| | | | COOPERATIVE PARTY | | "と" (PLAYED WITH HANAKO) |
| | | | CITATION | | "と" (BE AS …) |
| | | | LIMITATION | | "と" (BE IN A RANGE) |
| | | | MEANS | | "で" (WENT BY TAXI) |

26

# FIG. 9

| NAME OF TAG | DESCRIPTION OF TAG | DETERMINATION METHOD (ST PROVISION RULE) |
|---|---|---|
| mod | MODIFICATION RELATION | MODIFIER BEFORE VERB |
| spr | SUBJECT-PREDICATIVE RELATION | PROVIDED TO SUBJECT → PREDICATIVE |
| par | PARALLEL RELATION | END OF PHRASE IS "と", "や", "で", OR "で" EACH OF CT OF MORPHEMES BEING BEFORE AND AFTER POSTPOSITION DESCRIBED ABOVE BEING COMPLETELY MATCH |
| corr | ANAPHORIC RELATION (ANAPHORIC RELATION IN SENTENCE OR BETWEEN SENTENCES) | DETERMINE BASED ON CONDITION WHETHER OR NOT TO FALL UNDER ANY CT IN PREDETERMINED TYPES OF CT |
| agt | BEHAVIOR, ACTING SUBJECT HAVING INTENTION | DETERMINE BY CT OF SUBJECT/PREDICATIVE |
| exp | EXPERIENCER, PSYCHOLOGICAL EXPERIENCER, OR SUBJECT OF UNINTENTIONAL EVENT | DETERMINE BY CT OF SUBJECT/PREDICATIVE ···SUBJECT:SAME CT AS agt, PREDICATIVE : OTHER THAN agt, PREDETERMINED CT |
| cap | OBJECT CAUSING EVENT WITHOUT INTENTION | DETERMINE BY CT OF SUBJECT/PREDICATIVE ···SUBJECT:CT OTHER THAN agt, PREDICATIVE : CT OF VERB |
| gnr | GENERAL RELATION | DETERMINE BY CT OF SUBJECT/PREDICATIVE ···CT OTHER THAN agt, exp, AND cap |
| obj | OBJECT OF TRANSITIVE | END OF PHRASE IS "を" |
| iob | INDIRECT OBJECT | ·END OF PHRASE IS "に" OR "で" ·OTHER THAN LIVING OBJECT [(PREDETERMINED CT)] +"へ" |
| jnt | COOPERATIVE PARTICIPANT | PERSON [(PREDETERMINED CT)] + "と" |
| loc | SPATIAL POSITION | PLACE [(PREDETERMINED CT)] + "に" + VERB [(PREDETERMINED CT)] |
| lfp | SPATIAL TERMINAL | PLACE[(PREDETERMINED CT)] + "まで","へ", OR "に" |
| tim | TEMPORAL POSITION | -TEMPORAL NOUN + "に" -TEMPORAL NOUN + "の" -ADVERB [(PREDETERMINED CT)] + VERB [(PREDETERMINED CT)] ···· |
| sit | STATE, CONDITION, OR CASE | -ADJECTIVE [STATE] + NOUN -NOUN [(PREDETERMINED CT)] + ADJECTIVE [(PREDETERMINED CT)] -NOUN + DETERMINER ("である", "だ", OR "です") ···· |
| eq | EQUIVALENT | ·VERB + "こと" ·DEMONSTRATIVE + ANTECEDENT ·NOUN + "という" + NOUN ·NOUN + NOUN(DETERMINE EQUIVALENT AT CT LEVEL) ···· |
| pur | PURPOSE | ·VERB [(PREDETERMINED CT)] + "ために" ·VERB [(PREDETERMINED CT)] + "に" + VERB [(PREDETERMINED CT)] ·NOUN [(PREDETERMINED CT)]+ "に" + VERB [(PREDETERMINED CT)] ···· |
| cau | CAUSE | ·"だから" OR "なので" + ADJECTIVE [(PREDETERMINED CT)] ···· |
| rea | REASON | · "だから" OR "なので" + ～ + VERB [(PREDETERMINED CT)] ···· |
| res | RESULT | ·NOUN [(PREDETERMINED CT)] + "を" + VERB [(PREDETERMINED CT)] ·VERB [(PREDETERMINED CT)] + NOUN [(PREDETERMINED CT)] + "に" + VERB [(PREDETERMINED CT)] |

F I G. 1 0

ST SYSTEM TABLE (SEMANTIC TAG WHICH SHOULD BE PROVIDED BETWEEN SEQUENCE OF PHRASES AND PHRASE OR BETWEEN SEQUENCE OF PHRASES AND SEQUENCE OF PHRASES)

| NAME OF TAG | DESCRIPTION OF TAG | DETERMINATION METHOD (ST PROVISION RULE) |
|---|---|---|
| pur | PARPOSE | ·VERB [(PREDETERMINED CT)] + "ために (TAMENI)"<br>...... |
| cau | CAUSE | ·NOUN [(PREDETERMINED CT)] + PREDICATE [(PREDETERMINED CT)]<br>+ "だから (DAKARA)" OR "なので (NANODE)" OR···<br>·VERB [(PREDETERMINED CT)] + POSTPOSITION [(PREDETERMINED CT)]<br>+ AUXILIARY VERB [(PREDETERMINED CT (PAST))]<br>...... |
| rea | REASON | · "だから (DAKARA)" OR "なので (NANODE)" + 〜 + VERB [(PREDETERMINED CT)]<br>...... |
| res | RESULT | · "したがって (SHITAGATTE)" OR "そこで (SOKODE)" + PREDICATE [(PREDETERMINED CT)]<br>...... |

28

F I G. 1 1

ST SYSTEM TABLE (SEMANTIC TAG WHICH SHOULD BE
PROVIDED BETWEEN SENTENCE AND SENTENCE)

| NAME OF TAG | DESCRIPTION OF TAG | DETERMINATION METHOD (ST PROVISION RULE) |
|---|---|---|
| cause | CAUSE | ·CONJUNCTION [(PREDETERMINED CT (RESULTATIVE))]<br>( "従って(SHITAGATTE)" OR "そこで(SOKODE)" OR …)<br>(NOTE:PRECEDING SENTENCE IS CAUSE (CANDIDATE)) |
| reason | REASON | ·CONJUNCTION [(PREDETERMINED CT(CAUSE, REASON))]<br>( "何故ならば(NAZENARABA)" OR "そこで(SOKODE)" OR …) |
| result | RESULT | ·CONJUNCTION [(PREDETERMINED CT (RESULTATIVE))]<br>( "だから(DAKARA)" OR "そこで(SOKODE)" OR …)<br>…… |

FIG. 12

| ID | MORPHEME | WORD CLASS | DETAILED WORD CLASS | CT |
|---|---|---|---|---|
| 1 | 太郎(TARO) | NOUN | PROPER NAME | 1. 1. 1. 1 |
| 2 | 花子(HANAKO) | NOUN | PROPER NAME | 1. 1. 1. 2 |
| 3 | 公園 (KOUEN/PARK) | NOUN | GENERAL NOUN | 1. 5. 1 |
| · · · | · · · | · · · | · · · | · · · |

FIG. 13

```
              START

                │
                ▼
  ┌─────────────────────────────┐  S10
  │  READ TEXT DATA AS ANALYSIS  │
  │   TARGET DOCUMENT (OBTAIN    │
  │      INPUT TEXT DATA)        │
  └─────────────────────────────┘
                │
                ▼
  ┌─────────────────────────────┐  S12  ┐
  │       MORPHEME ANALYSIS      │       │
  └─────────────────────────────┘       │
                │                        │
                ▼                        │
  ┌─────────────────────────────┐  S14  │
  │        SYNTAX ANALYSIS       │       ├ TEXT ANALYSIS
  └─────────────────────────────┘       │
                │                        │
                ▼                        │
  ┌─────────────────────────────┐  S16  │
  │       CONTEXT ANALYSIS       │       │
  └─────────────────────────────┘       ┘
                │
                ▼
  ┌─────────────────────────────┐  S18
  │       SEMANTIC ANALYSIS      │
  └─────────────────────────────┘
                │
                ▼
              END
```

F I G.  1 4

```
                        ┌─────────────────────────┐      ←── S12
                        │   MORPHEME ANALYSIS     │
                        └─────────────────────────┘
                                    │
                                    ▼                      S122
        ┌───────────────────────────────────────────────┐
        │  IDENTIFY DELIMITER BETWEEN MORPHEMES         │
        │   IN INPUT TEXT DATA TO DETERMINE             │
        │  WORD CLASS OF EACH OF MORPHEMES              │
        └───────────────────────────────────────────────┘
                                    │
                                    ▼                      S124
        ┌───────────────────────────────────────────────┐
        │     PROVIDE CONCEPT TAG TO EACH               │
        │   MORPHEME IN INPUT TEXT DATA                 │
        └───────────────────────────────────────────────┘
                                    │
                                    ▼                      S126
        ┌───────────────────────────────────────────────┐
        │   GENERATE SPACED-WRITING DATA D1             │
        └───────────────────────────────────────────────┘
                                    │
                                    ▼
                        ┌─────────────────────────┐
                        │          END            │
                        └─────────────────────────┘
```

F I G. 1 5

```
                    ┌─────────────────────┐        S14
                    │  SYNTAX  ANALYSIS   │  ←───
                    └─────────────────────┘
                              │
                              ▼                        S142
        ┌──────────────────────────────────────┐
        │   OBTAIN  DEPENDENCY  STRUCTURE        │
        │      OF  INPUT  TEXT  DATA             │
        └──────────────────────────────────────┘
                              │
                              ▼                        S144
        ┌──────────────────────────────────────┐
        │    OBTAIN  PHRASE  STRUCTURE          │
        │      OF  INPUT  TEXT  DATA            │
        └──────────────────────────────────────┘
                              │
                              ▼                        S146
        ┌──────────────────────────────────────┐
        │      GENERATE  SYNTAX  DATA  D2       │
        └──────────────────────────────────────┘
                              │
                              ▼
                    ┌─────────────────┐
                    │       END       │
                    └─────────────────┘
```

F I G.  1 6

```
        ┌──────────────────────┐
        │  CONTEXT ANALYSIS    │ ←──── S16
        └──────────┬───────────┘
                   │
                   ▼                   ─S162
  ┌───────────────────────────────────────┐
  │ ANAPHORIC ANALYSIS BASED ON SYNTAX     │
  │ DATA D2 (IDENTIFY ANAPHORIC            │
  │ RELATION OF INPUT TEXT DATA)           │
  └───────────────────┬────────────────────┘
                      │                ─S164
                      ▼
  ┌───────────────────────────────────────┐
  │ DISCOURSE STRUCTURE ANALYSIS BASED     │
  │ ON SYNTAX DATA D2 (IDENTIFY            │
  │ DISCOURSE RELATION IN INPUT TEXT DATA) │
  └───────────────────┬────────────────────┘
                      │                ─S166
                      ▼
  ┌───────────────────────────────────────┐
  │  GENERATE CONTEXT-SYNTAX DATA D3       │
  └───────────────────┬────────────────────┘
                      │
                      ▼
               ┌────────────┐
               │    END     │
               └────────────┘
```

F I G.　1 7

```
        ( SEMANTIC ANALYSIS )  ←――― S18
                  │
                  ▼               ―S182
 ┌───────────────────────────────────┐
 │  PROVIDE SEMANTIC TAG TO PAIR OF   │
 │ PHRASE/ SEQUENCE OF PHRASES AND    │
 │   PAIR OF SENTENCES BASED ON       │
 │     CONTEXT-SYNTAX DATA D3         │
 └───────────────────────────────────┘
                  │
                  ▼               ―S184
 ┌───────────────────────────────────┐
 │  GENERATE SEMANTIC REPRESENTATION  │
 │      DATA CORRESPONDING TO         │
 │        INPUT TEXT DATA             │
 └───────────────────────────────────┘
                  │
                  ▼
            (   END   )
```

FIG. 18A  TEXT | 太郎は公園へ行った。(TARO WA KOUEN E ITTA/TARO WENT TO THE PARK.)

FIG. 18B  TEXT

| 太郎(TARO) | は(WA) | 公園(KOUEN) | へ(E) | 行っ(IT) | た(TA) | 。 |
|---|---|---|---|---|---|---|
| **CT** PERSON -MALE NAME | SUBJECT | PUBLIC FACILITY -SPACE | DIRECTION | BEHAVIOR -MOVEMENT | PAST | SIGN -END |

FIG. 18C

TEXT | 太郎(TARO) | は(WA) | 公園(KOUEN) | へ(E) | 行っ(IT) | た(TA) | 。

PHRASE

DEPENDENCY STRUCTURE (MODIFICATION)

FIG. 18D

agt (agt, exp)

lfp

ST

太郎(TARO) は(WA)   公園(KOUEN) へ(E)   行っ(IT) た(TA)

CT

PERSON -MALE NAME   PUBLIC FACILITY-SPACE   BEHAVIOR -MOVEMENT

SUBJECT   DIRECTION   PAST

FIG. 19A  TEXT

| 太郎は花子と応援に行った。<br>(TARO WA HANAKO TO OUEN NI ITTA/TARO WENT TO CHEER WITH HANAKO.) |
| --- |

FIG. 19B  TEXT

| 太郎(TARO) | は(WA) | 花子<br>(HANAKO) | と(TO) | 応援(OUEN) | に(NI) | 行っ(IT) | た(TA) | 。 |
| --- | --- | --- | --- | --- | --- | --- | --- | --- |

CT

| PERSON<br>-MALE<br>NAME | SUBJECT | PERSON<br>-FEMALE<br>NAME | OTHER<br>PARTY<br>-COOPERATIVE<br>PARTY | PHYSICAL<br>ACTIVITY<br>-VIEWING<br>ACTION | PURPOSE | BEHAVIOR<br>-MOVEMENT | PAST | SIGN<br>-END |
| --- | --- | --- | --- | --- | --- | --- | --- | --- |

TEXT

| 太郎(TARO) | は(WA) | 花子<br>(HANAKO) | と(TO) | 応援(OUEN) | に(NI) | 行っ(IT) | た(TA) | 。 |
| --- | --- | --- | --- | --- | --- | --- | --- | --- |

FIG. 19C  PHRASE

DEPENDENCY
STRUCTURE
(MODIFICATION)

FIG. 19D

ST

agt (agt, exp)

jnt

pur

| 太郎(TARO) は(WA) | 花子<br>(HANAKO) と(TO) | 応援(OUEN) に(NI) | 行っ(IT) た(TA) |
| --- | --- | --- | --- |

CT

| PERSON<br>-MALE NAME | PERSON<br>-FEMALE NAME | PHYSICAL<br>ACTIVITY<br>-VIEWING<br>ACTION | BEHAVIOR<br>-MOVEMENT |
| --- | --- | --- | --- |

SUBJECT

OTHER PARTY
-COOPERATIVE
PARTY

PURPOSE

PAST

FIG. 20A

TEXT

電熱線が高温だった。
(DENNETSUSEN GA KOUON DATTA/A HEATING WIRE WAS HOT.)
電熱線が軟化した。
(DENNETSUSEN GA NANKA SHITA/A HEATING WIRE WAS SOFTENED.)

FIG. 20B

| TEXT | 電熱線<br>(DENNETSUSEN) | が(GA) | 高温<br>(KOUON) | だっ(DAT) | た(TA) | 。 |
|---|---|---|---|---|---|---|
| CT | MATERIAL<br>-METAL<br>-PROCESSED<br>OBJECT<br>-METAL WIRE | SUBJECT | INDEX<br>-DEGREE<br>-HOT OR<br>COLD<br>-HOT | POSITIVE | PAST | SIGN<br>-END |

| TEXT | 電熱線<br>(DENNETSUSEN) | が(GA) | 軟化(NANKA) | し(SHI) | た(TA) | 。 |
|---|---|---|---|---|---|---|
| CT | MATERIAL<br>-METAL<br>-PROCESSED<br>OBJECT<br>-METAL WIRE | SUBJECT | EVENT<br>-STATE CHANGE<br>-SOFT | IRREGULAR<br>VERB OF<br>"SURU" IN<br>JAPANESE | PAST | SIGN<br>-END |

FIG. 20C

FIRST SENTENCE

gnr

電熱線(DENNETSUSEN) が(GA)

高温(KOUON) だっ(DAT) た(TA)

MATERIAL-METAL
-PROCESSED
OBJECT
-METAL WIRE

SUBJECT

INDEX-DEGREE
-HOT OR
COLD
-HOT

POSITIVE

PAST

cau

eq

cap

電熱線(DENNETSUSEN) が(GA)

軟化(NANKA) し(SHI) た(TA)

MATERIAL-METAL
-PROCESSED
OBJECT
-METAL WIRE

SUBJECT

EVENT
-STATE CHANGE
-SOFT

IRREGULAR
VERB OF
"SURU" IN
JAPANESE

PAST

SECOND SENTENCE···result

FIG. 21A

TEXT

私は参考になる本を本屋で見つけた。
(WATASHI WA SANKOUNI NARU HON WO HONYA DE MITSUKETA
/I FOUND A HELPFUL BOOK IN A BOOK STORE.)
本は赤色で安かった。
(HON WA AKAIRO DE YASUKATTA/THE BOOK WAS RED AND CHEAP.)
それを早速買った。
(SORE WO SASSOKU KATTA/(I) BOUGHT IT IMMEDIATELY.)

FIG. 21B

Europäisches
Patentamt

European
Patent Office

Office européen
des brevets

# EUROPEAN SEARCH REPORT

Application Number

EP 24 16 1313

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Schakel Adriaan ET AL: "Measuring Word Significance using Distributed Representations of Words", arXiv (Cornell University), 10 August 2015 (2015-08-10), pages 1-7, XP093183665, DOI: 10.48550/arxiv.1508.02297 Retrieved from the Internet: URL:https://arxiv.org/pdf/1508.02297 [retrieved on 2024-07-09] * sections 3.2 & 3.3; page 1, right-hand column, last paragraph - page 2, left-hand column, paragraph 3 * | 1-7 | INV. G06F40/247 G06F40/30 |

-----

**TECHNICAL FIELDS SEARCHED (IPC)**

G06F

The present search report has been drawn up for all claims

| Place of search | Date of completion of the search | Examiner |
|---|---|---|
| Berlin | 11 July 2024 | Abram, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019121044 A